# EUROPEAN PATENT APPLICATION

(11) **EP 0 971 295 A1**
(43) Date of publication of application: **12.01.2000**
(21) Application number: 97949249.3
(22) Date of filing: 26.12.1997
(51) Int. Cl.: G06F 17/30

(54) **SYSTEM FOR AUTOMATICALLY ORGANIZING DIGITAL CONTENTS AND RECORDING MEDIUM ON WHICH AUTOMATICALLY ORGANIZED DIGITAL CONTENTS ARE RECORDED**

(71) Applicant: Rip Japan Co. Ltd., Oota-Ku, Tokyo 144 (JP); Yukino, Kensaku, Shinjuku-ku, Tokyo 162 (JP)
(72) Inventor: YUKINO, Kensaku, Shinjuku-ku, Tokyo 162 (JP)
(74) Representative: Casalonga, Axel
(86) International application number: JP9704880
(87) International publication number: WO9934303

(57) **Abstract**

The present invention provides an automatic preparation system for digital content for preparing predetermined digital contents, which uses descriptive language of HTML or other protocols and performs automatic preparation by optimizing disposition of display elements having suitability and feature in relation to layout using menu page automatic preparation means (2) and commodity page automatic preparation means (2). The menu pages and the commodity pages include data base with information on commodities accumulated on it (such as information on commodity name, standards, photographs, graphics, etc.) and hierarchized classified information.

## Description

### TECHNICAL FIELD

The present invention relates to a digital contents preparation system, and in particular, to a preparation system for preparing digital contents such as electronic catalog, CD(compact disk)-ROM, etc. via on-line system including WWW (world wide web) on Internet, personal computer communication, etc.

### BACKGROUND ART

With rapid propagation of personal computers and Internet, commercial dealings via network called "on-line shopping" are now rapidly and widely propagated. In the on-line shopping, a summarized list of commodities is displayed on home page, or catalog of commodities is offered to customers as electronic data. In the past, home pages for such on-line shopping or digital contents such as electronic catalogs have been prepared by manual preparation method or dynamic preparation method according to data base. In the former method, individual pages are prepared manually, and the data is organized by manually preparing menu pages linked to the individual pages. In the latter method, users are asked to input retrieval key words on home page, retrieval system on the background is operated by CGI (common gateway interface), and a summarized page of commodities or the like and linked pages displaying commodities are generated each time in response to the retrieval result.

In the manual preparation method, a large number of pages are prepared manually, and this requires much labor and cost. Also, it is necessary to confirm that the linking is correctly executed, and this requires much more labor and cost. In case of maintenance such as change of the recorded commodities, much labor is needed, and it is difficult to update in speedy manner, and erroneous linking was also unavoidable in many cases.

On the other hand, in the manual preparation method, layout and background data such as commodity name, commodity specification, price, photograph, etc. are designed to match each individual commodity, and commodity pages with high retroactive effect can be prepared. Also, this is advantageous in that the burden on the servers is low, and relatively small server can cope with the situation where a large number of users try to gain access at the same time.

In the dynamic preparation method according to data base, user inputs retrieval conditions such as commodity name, commodity classification, price range, etc. on a retrieval page, and clicks a retrieval start button to give retrieval instruction. Then, a retrieval system connected with that page by CGI retrieves data base. Based on the retrieval result, a summarized page of commodities and commodity display page linked with it are generated each time. This dynamic preparation method according to data base is advantageous in that the information on a large number and a wide variety of commodities and the like can be offered, while it has problems in that expression effect and retroactive effect of commodity images are low because the format of the commodity display pages is fixed and limited. Also, the retrieval system and commodity page generating system give heavy burden on server and these systems must be started each time when the user gives retrieval instruction and display instruction. For this reason, response may be delayed when a large number of users try to gain access at the same time or trouble may occur on the system (problem of excessive burden on the server). In this respect, in case of a system where simultaneous access of a large number of users is expected, a server with higher capacity must be available.

### DISCLOSURE OF THE INVENTION

To overcome the above problems, it is an object of the present invention to provide an automatic preparation system, by which it is possible to automatically prepare digital contents for retrieval and display of a large number and a wide variety of commodities and to prepare commodity pages full of variety and having high retroactive effect. Also, it is another object of the invention to provide an automatic preparation system, by which it is possible to offer services to a large number of users via a relatively small server. Further, it is still another object of the present invention to provide an automatic preparation system, by which it is possible to reduce labor and other costs compared with the conventional system in case the same number of pages are prepared. It is still another object of the invention to provide an automatic preparation system for digital contents, by which it is possible to prepare contents to cope with not only with a single protocol but also with a plurality of protocols.

To attain the above objects, the present invention provides an automatic preparation system for digital content for preparing predetermined digital contents, which uses descriptive language of HTML or other protocols and performs automatic preparation by optimizing disposition of display elements having suitability and feature in relation to layout using menu page automatic preparation means and commodity page automatic preparation means. The menu pages and the commodity pages include data base with information on commodities accumulated on it (such as information on commodity name, standards, photographs, graphics, etc.) and hierarchized classified information.

Specifically, the present invention provides an automatic preparation system for digital contents, which comprises
means for using descriptive language of HTML or other protocols for information processing in the preparation of digital contents including characters and images;
means for accepting and storing data showing features of the image portion and/or suitability in relation to layout on screen; and
means for reading the data showing features of the image portion and/or suitability in relation to layout on screen and for optimizing disposition using the data when disposing the image portion on screen.

Further, the present invention provides an automatic preparation system for digital contents, which comprises
means for using descriptive language of HTML or other protocols for information processing;
automatic preparation means for menu pages;
automatic preparation means for commodity pages; and
means for optimizing disposition of display elements having suitability and/or features in relation to layout on screen in association with the menu page automatic preparation means and the commodity page automatic preparation means.

Also, the present invention provides a recording medium, which comprises digital contents automatically prepared by optimizing disposition of image portion on screen when digital contents including character and image portions are prepared, whereby descriptive language of HTML or other protocols is used for information processing, and data showing feature of the image portion and/or suitability in relation to layout on screen is used.

### BRIEF DESCRIPTION OF THE DRAWINGS

Fig. 1 is a block diagram showing a system 1, which provides an electronic catalog of a bookstore in two modes, i.e. via WWW on Internet and CD-ROM, according to an embodiment of the present invention;
Fig. 2 represents hierarchies from menu pages to book pages;
Fig. 3 is a flowchart of a book page in the processing of an automatic preparation system in an embodiment of the present invention;
Fig. 4 shows an example of layout of a book page which has a cover page image;
Fig. 5 shows a book template in the present embodiment;
Fig. 6 shows a display element correspondence table;
Fig. 7A and Fig. 7B each represents a HTML template and a HTML document with data incorporated in it;
Fig. 8 represents a screen image of a template file with no photographic image;
Fig. 9 is a flowchart showing a part continued to the flowchart of Fig. 3;
Fig. 10 is a flowchart showing a part continued to the flowchart of Fig. 9;

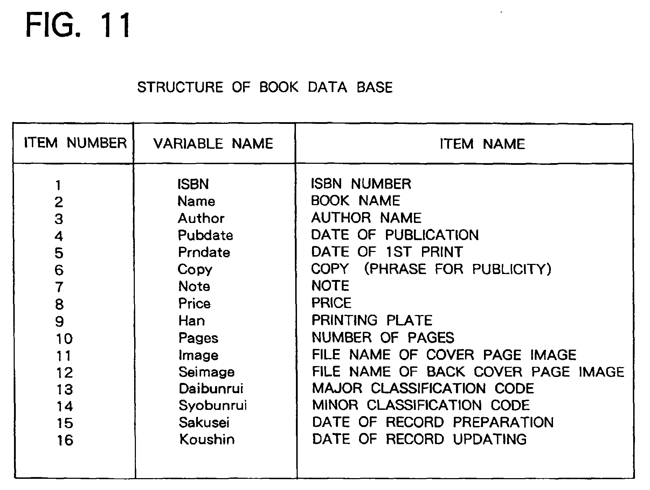

Fig. 11 represents a book data base in the present embodiment;
Fig. 12 is a flowchart showing a part continued to the flowchart of Fig. 10;
Fig. 13 shows an arrangement of major classification codes and minor classification codes;
Fig. 14 shows file names on a major classification menu page and a minor classification menu page;
Fig. 15 shows an arrangement of file names on a major classification menu page;
Fig. 16 shows a screen image and a document source of a template file on a major classification menu page;
Fig. 17 is a flowchart in case the major classification menu page of the present embodiment is automatically prepared;
Fig. 18 is a flowchart of a part continued to the flowchart of Fig. 17;
Fig. 19 shows a screen image and a document source of a template file of a minor classification menu page;
Fig. 20 is a flowchart in case the minor classification menu page is automatically prepared;
Fig. 21 is a flowchart of a part continued to the flowchart of Fig. 20;
Fig. 22 shows a flowchart in case individual minor classification book menu pages are prepared;
Fig. 23 represents a code table continued to that of Fig. 13;
Fig. 24 is a flowchart to prepare a book menu file;

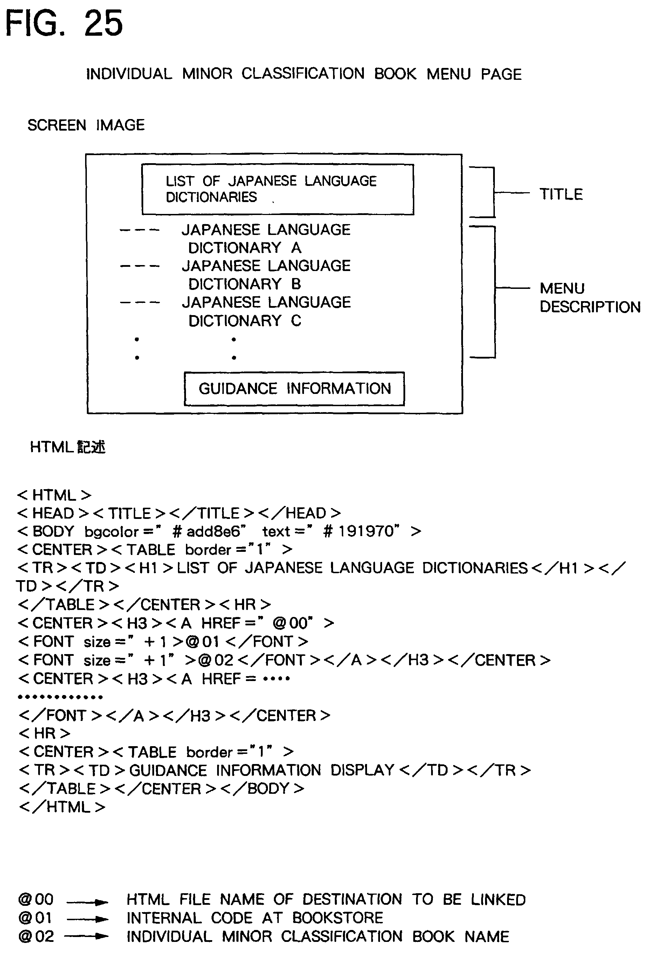

Fig. 25 shows a screen image and a document source of individual minor classification book menu page;
Fig. 26 shows a data base retrieval screen and its operation;
Fig. 27 is a flowchart showing data base retrieval processing;
Fig. 28 is a flowchart showing process of automatic preparation of a retrieval result menu;
Fig. 29 is a block diagram showing a system 20, which provides an electronic catalog of clothings in two modes, i.e. via WWW on Internet and via telephone network according to an embodiment of the present invention;
Fig. 30 shows preparation of a custom template;
Fig. 31 is a drawing continued to Fig. 29;
Fig. 32 is a drawing continued to Fig. 30;
Fig. 33 is a flowchart in the preparation of a commodity page;
Fig. 34 is a flowchart showing a part continued to the flowchart of Fig. 32;
Fig. 35 shows an arrangement of commodity pages and disposition of images;
Fig. 36 represents examples of templates showing optimal disposition depending on amount of display elements;
Fig. 37 shows a screen layout in a third embodiment of the present invention; and
Fig. 38 is a drawing to explain a synthetic method in a fourth embodiment of the present invention.

### LEGEND OF THE SYMBOLS

1: A system for providing an electronic catalog of books in two modes, i.e. WWW on Internet and CD-ROM; 7: Internet; 8: CD-R writer; 9: disk; 10: book data base; 10A: clothing data base; 11: contents; 13: HTTPD (WWW server program); 14: automatic preparation program; 15: book data base retrieval system; 15A: clothing data base retrieval system; 16: template; 17: personal computer communication host program; 18A and 18B: modems; 20: a system for providing shopping information of clothings in two modes, i.e. WWW on Internet and telephone network using modems.

### BEST MODE FOR CARRYING OUT THE INVENTION

In the following, description will be given on the preferred embodiments of the present invention referring to the attached drawings.

### (1) 1st embodiment

In a first embodiment of the present invention, description will be given on a case where an electronic catalog is prepared by automatic preparation of book data base. In this embodiment, information of the objects to be offered such as commodities, article information, phenomena, etc. are collectively called "commodity".

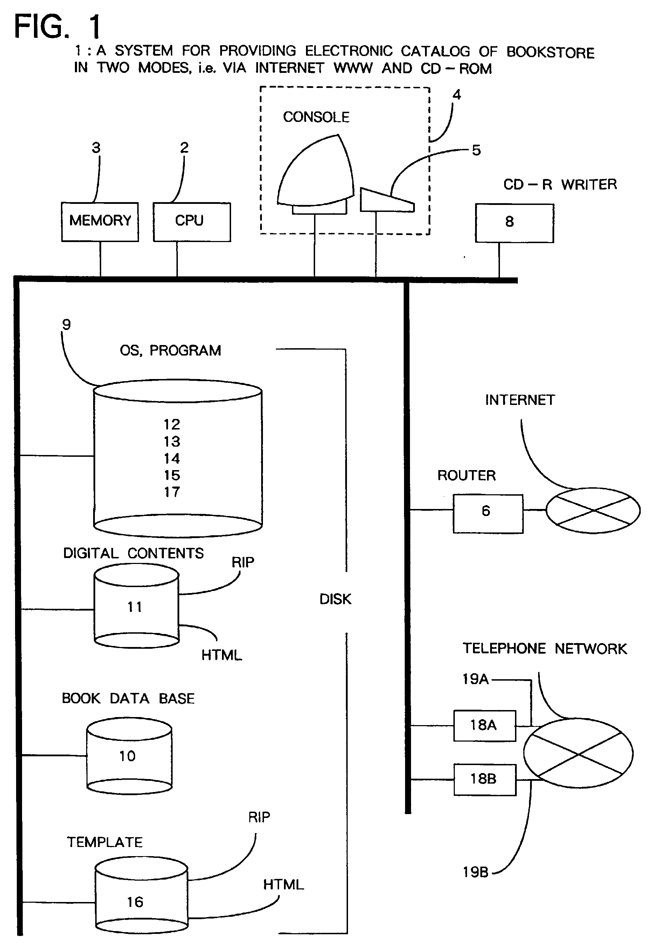

Fig. 1 is a block diagram showing a system 1, which provides an electronic catalog of books according to the embodiment of the invention offered in three modes, i.e. via WWW on Internet, via graphic personal computer communication using RIPscrip, which is a multi-media communication language, and further, via CD-ROM. In this system 1, there are provided three methods: a method to refer to an electronic catalog of books on Internet via on-line system, a method to refer to it via personal computer communication, and a method to refer to it on user's personal computer using CD-ROM. A central processing unit (CPU) 2 comprises a system control circuit, which controls the entire operation of the system 1 providing an electronic catalog of a bookstore in three modes, i.e. via WWW on Internet, graphic personal communication, and CD-ROM.

The system 1 comprises a CPU 2, a memory 3, a console 4, a CD-ROM writer, a hard disk 9, and other storage devices 10, 11, 16, etc., and it is connected to Internet or to public telephone line via a router 6 or two modems 18A and 18B. The memory 3 reads an operating system (OS) 12 in the hard disk 9 when the CPU 2 is started, and it is used as a working area when the CPU 2 is operated. It is used to read program and data from the hard disk 9 or from the book data base 10 and to perform various types of processing. Commodity data base contains information such as commodity name, standards, photographs, graphics, etc.

The console 4 is used for the control of the entire system and is also used for giving instructions to run an automatic preparation program 14 via a keyboard 5 or for inputting new data to the book data base 10.

The router 6 is a device to connect the system 1 to Internet 7 via a dedicated line. Internet 7 serves as a route to provide information to a number of external users via one-line system. Two modems 18A and 18B are used by the user to gain access to a personal computer communication host via public telephone line.

The CD-R writer 8 is used to write contents data. The hard disk 9 is used to store a program for starting personal computer and other various programs and as a working area when the system is operated. The book data base 10 comprises book name, ISBN number, i.e. code number of the book, name of the author, date of the first edition, date of the revised edition, printing plate form, number of pages, bookbinding design, publisher's own classification, copy (phrase for publicity), comments, table of contents, half-wrapper, preface, cover page image, text image, date of record preparation, date of the last updating, etc., and these are retained in the hard disk.

The template 16 is a pattern form, which is used in combination with information of the book data base to prepare the contents. In the system 1, it is prepared to match two protocols: HTML (hyper text markup language) used in WWW and RIP (remote imaging protocol; RIPscrip), which is a graphics communication language to be used in personal communication of ignored process. To meet the requirements to provide book data information, several patterns of the template 16 are prepared. More concretely, two patterns are prepared, i.e. a pattern with cover page image and a pattern without cover page image.

Here, brief description is given on RIP. RIP was developed by Telegrafix in U.S. in 1992, and the version 1.54 prepared in October 1993 has been widely used in personal computer communication in U.S. and it has been adopted in most of host programs for personal computer communication. At present, more than 50% of communication software of ignored process now commercially available in U.S. use RIP.

Like NAPLPS, RIP is provided with such functions that graphics plotting command is sent from host side and the plotting command is interpreted at terminal side and is plotted on the screen. The difference from NAPLPS is that command description of RIP is concise and compact (30% compared with NAPLPS), and this increases the image transfer rate by three times. Also, RIP has mouse interface function which is not found in NAPLPS, and it is possible to easily prepare button and click area.

In addition, the language is characterized in that it has good network transmittance because it is described in ASCII code, that it has a function for automatic download of graphics data, and that it can easily turn the system of conventional interactive menu type to that of graphics type. It is now planned to develop a new version of RIP in Japanese language.

As the materials relating to RIP, there are RIPscrip Graphics Protocol Specification (Japanese translation) and RIPscrip White Paper (Japanese translation). The former is easily available because it is registered in a file name of "RIPINFO.ZIP" in Niftyserve, CompuServe Corner, 6. Compu-Serve and International Communication Corner and data library.

In the digital contents (or simply referred as "contents") 11, book pages and menu pages described using HTML and RIP are stored. The OS 12 is a basic software (operating system) to operate computer system of the system 1. HTTPD is a program for providing the contents described in HTML via Internet. The personal computer communication host program 17 is a program to operate personal computer communication host station, which provides graphical book information described in RIP, to the user who gains access via public lines 19A and 19B. Automatic preparation program 14 prepares the contents 11 comprising book pages and book menu pages by incorporating book information recorded on book data base onto the template 16. The book data base retrieval system 15 is a system for retrieving the book data base 100 by key words, book name, etc.

The automatic preparation program 14 prepares menu pages of major classification, and further prepares menu pages of minor classification and menu pages of books belonging to individual minor classification, and it is designed in such manner that menu pages in three hierarchies can be prepared.

In addition to the function to prepare hierarchy menu, the automatic preparation program 14 is provided with the function to prepare book page to offer detailed information on various types of books. The function to prepare book page is such a function that the template 16 is selected according to presence or absence of display image data, and contents of book page are prepared by incorporating data (such as book name and author name kept in the record of the book data base) into the template.

The automatic preparation program 14 is also provided with the function to cope with a multiple of protocols and to prepare the contents in HTML as well as in RIP. In this case, the data such as book name is incorporated from the record of the book data base to a RIP template, and the contents to be used by personal computer communication host program 17 are prepared. In case the protocol is in HTML, the contents prepared by the automatic preparation program 14 can be provided via Internet 7 and also in CD-ROM. In this case, a master CD-R is prepared using CD-R recorder.

When the contents are automatically prepared, the automatic preparation program 14 automatically prepares for books except those already out of print. Also, the automatic preparation program 14 can perform differential updating, i.e. it performs automatic preparation only for the record, which has been newly established after the previous automatic preparation, or only for the updated record.

The book data base retrieval system 15 of the first embodiment has the function to retrieve by key words, classification, author name, and book name, and to prepare a summarized page summarizing the results of the retrieval. The summarized page of the retrieval results is linked to the book pages, which display detailed information.

As described above, in the first embodiment, there is provided a method to retrieve the desired book by two types of approaches for the user who gains access via WWW or personal computer communication based on the book page, which provides detailed information on books. The first approach is to sequentially select hierarchical menus of major and minor classifications and to retrieve by book summary menu (hierarchical menu retrieval method). The second approach is to retrieve by key words such as book name, author name, classification, etc. and to utilize the book data base retrieval system and to retrieve by the summary page of retrieval results (data base retrieval method).

Next, description will be given on operation of the system in the first embodiment. In the above arrangement, the automatic preparation program 14 prepares book pages and menu pages, and an electronic catalog of the book is offered to a terminal equipment on on-line system via Internet 7 or via telephone network by the prepared menu page.

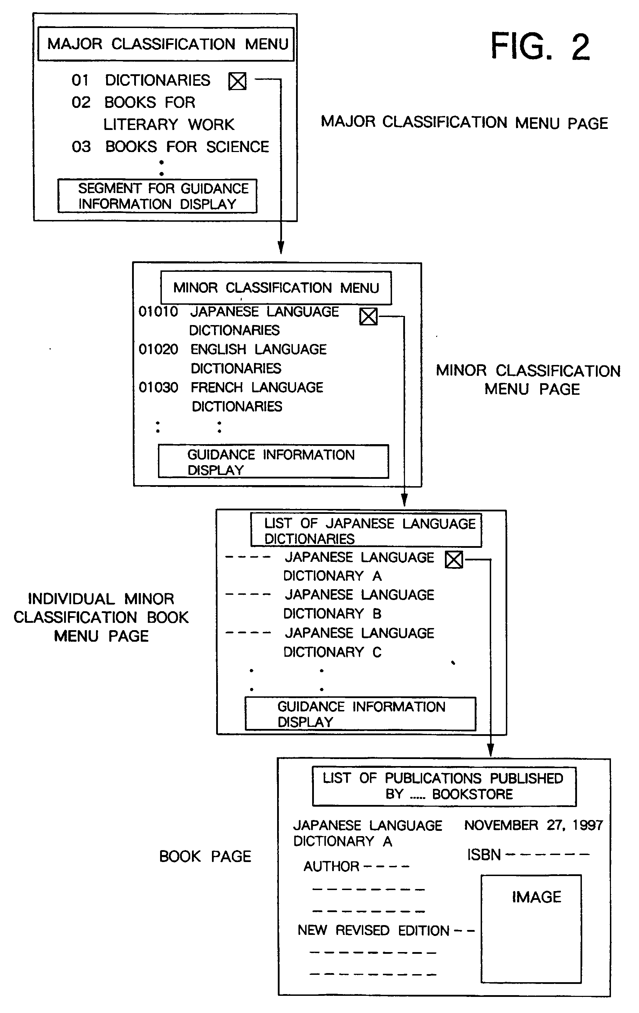

Fig. 2 shows pages of each of the hierarchies prepared by the automatic preparation program 14. Here, pages of four hierarchies are prepared. In the first hierarchy, a major classification menu page is prepared. On this page, 2-digit classification codes and roughly selected classification names are given. Guidance information is displayed under the classification codes and classification names. In the second hierarchy, a minor classification menu page is prepared, and 5-digit classification codes and classification names selected more elaborately than in major classification are given on this page. Guidance information is displayed under the classification codes and the classification names.

In the third hierarchy, a book menu page of individual minor classification is displayed, and book codes and classification names are given on this page. Guidance information is displayed under the classification codes and the classification names. On a book page of the fourth hierarchy, individual books are introduced, and menus, book names, author names, ISBN numbers, copies, comments, etc. are described. A photograph of the cover of the book is incorporated as an image data.

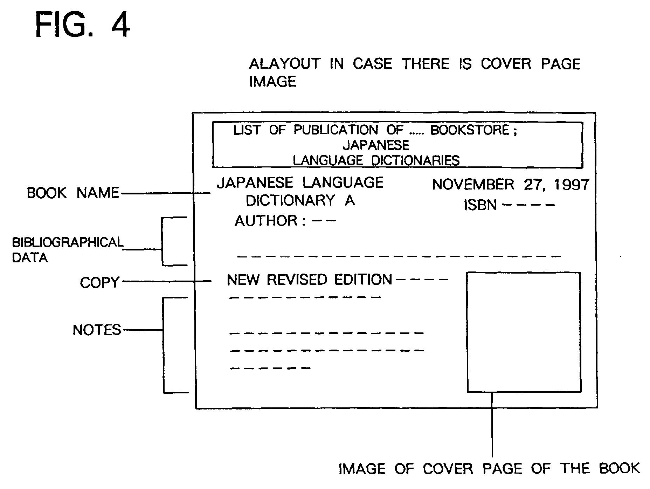

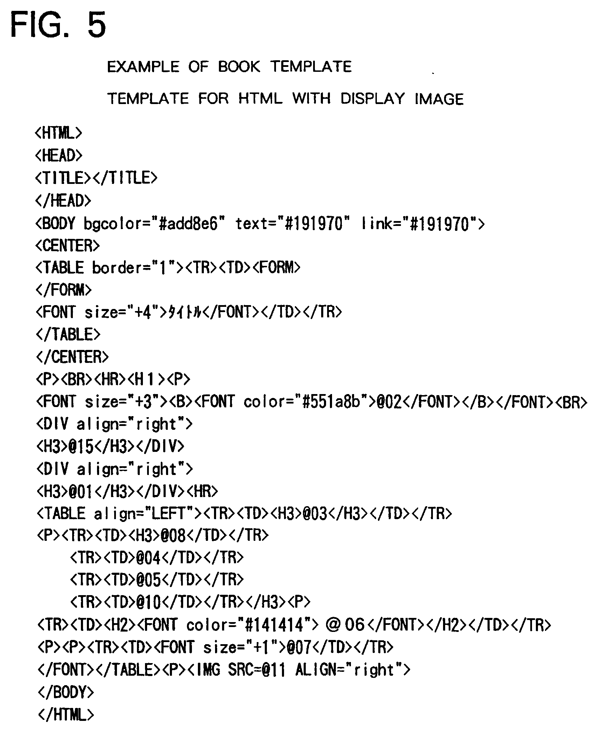

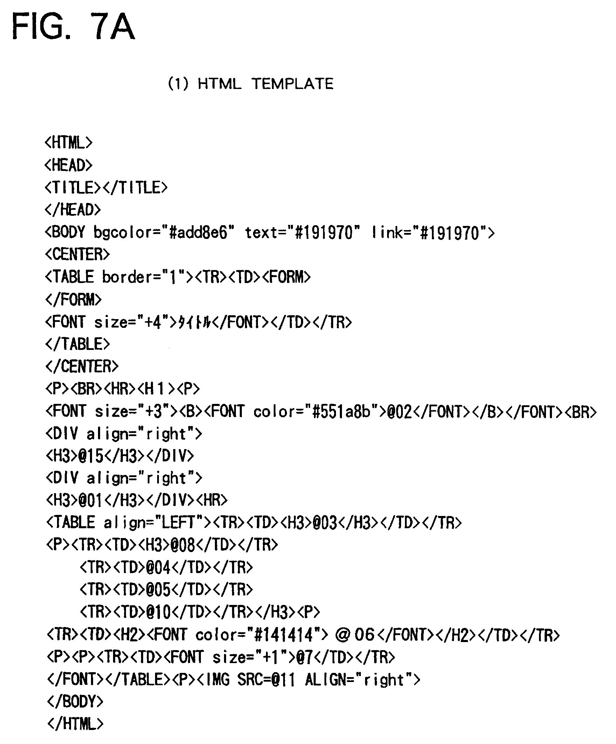

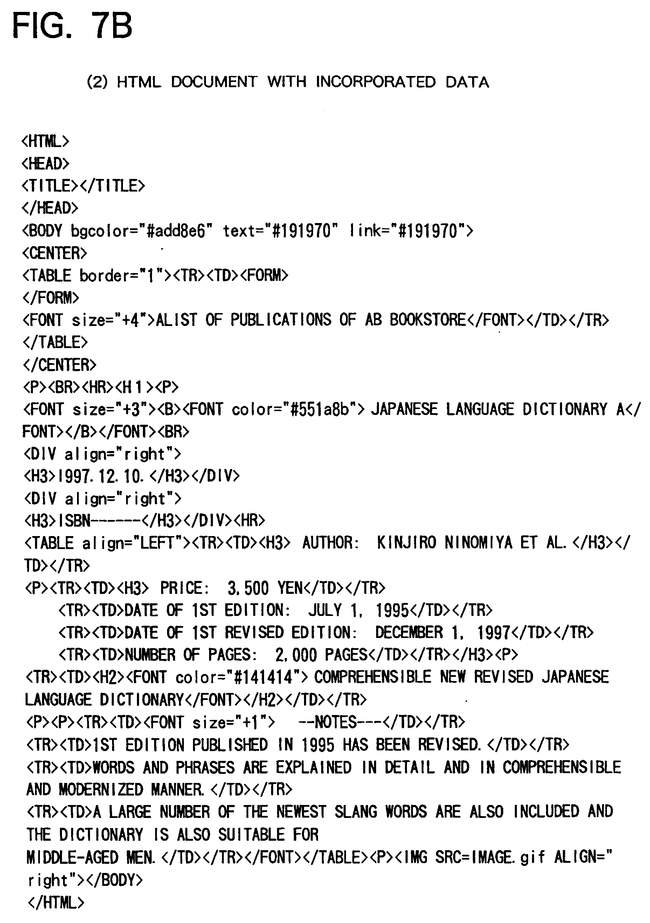

Fig. 4 shows a screen image of a book page, which contains images such as photographs, and Fig. 5 represents HTML document corresponding to it. Fig. 4 represents a picture of contents, which have been prepared by applying the data of the book data base 10 to the template. When automatic preparation is performed, a predetermined data is incorporated to HTML template from the book data base as shown in Fig. 7B, and a complete HTML document is prepared. In this manner, the contents of book pages with a constant format are automatically prepared. On this screen, header images such as "publication catalog of the publisher .....; dictionary of Japanese language" or the like are displayed. Next, bibliographical data such as date of registration, book name, ISBN number, author name, etc. and copies, comments, and cover page image of the book are displayed.

Fig. 7A and Fig. 7B represent a HTML template and a template with the data incorporated in it respectively. Tags are entered on the HTML template, and the positions to enter book name, author name, etc. are specified.

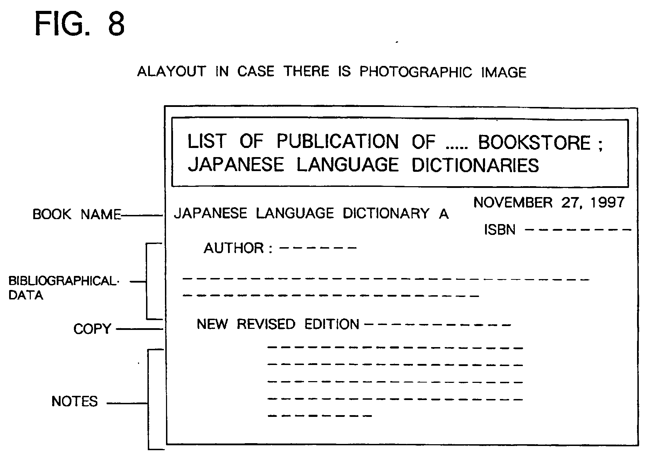

In contrast, screen image of a book is shown in Fig. 8 in case there is no specific image such as photograph. HTML document is prepared in the same manner as described above, but there is no description of screen image.

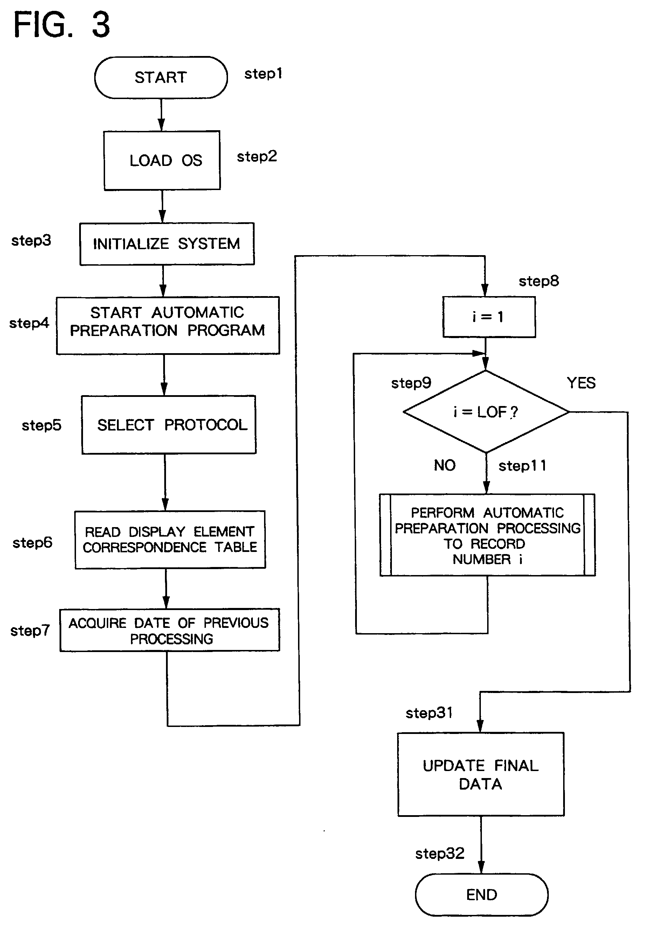

Fig. 3 is a flowchart in case book pages are automatically prepared. In Fig. 3 and in the other flowcharts, the start of the processing is indicated by "START", and the end of the processing is indicated by "END", and each step of processing is given as a numbered "step". The processing proceeds from Step 1 to Step 2, and the system is started, and OS is loaded. In Step 3, the system is initialized, and the automatic preparation program 14 is started in Step 4.

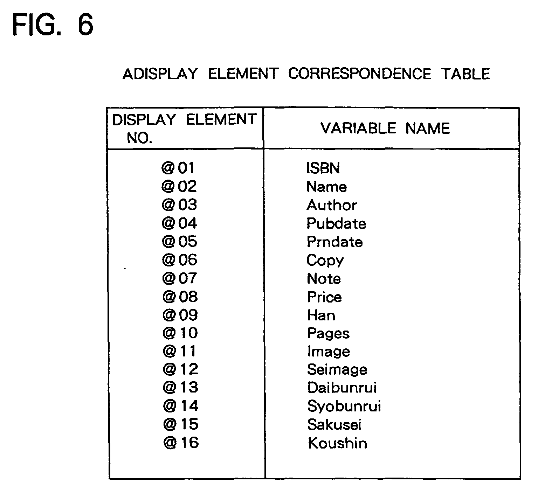

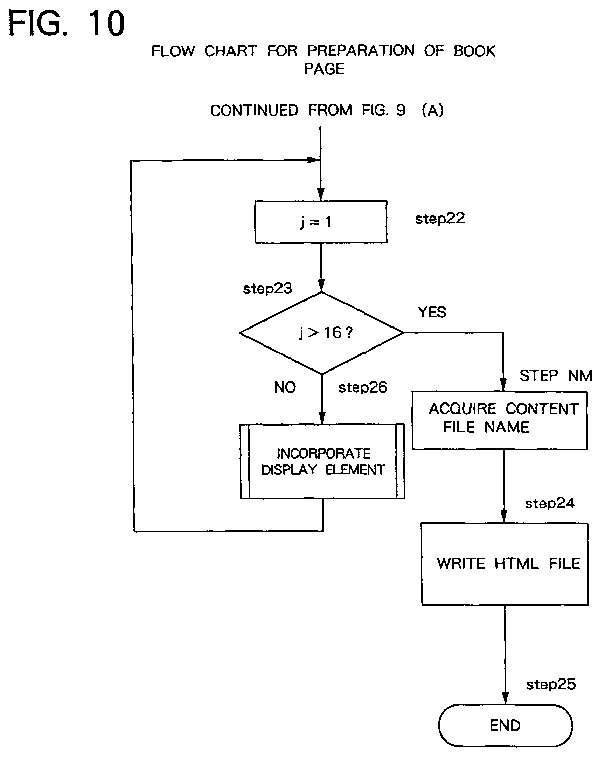

In Step 5, operator selects from the console whether the protocol is RIP or HTML. Next, in Step 6, a display element correspondence table is read. The display element correspondence table is as shown in Fig. 6. In this table, variable names are given, which indicate which of the data in the book data base of Fig. 10 should be incorporated at the position in the template such as @01. Here, four templates are prepared, i.e. those prepared by two protocols of RIP and HTML, and those with or without display image on book page.

In Step 7, the date of the processing of previous automatic preparation, i.e. "previous processing date" is acquired. Next in Step 8, a loop counter to be used from Step 9 to Step 11 is set to 1. In Step 9, it is judged whether processing has been terminated or not with respect to the total number of records (LOF).

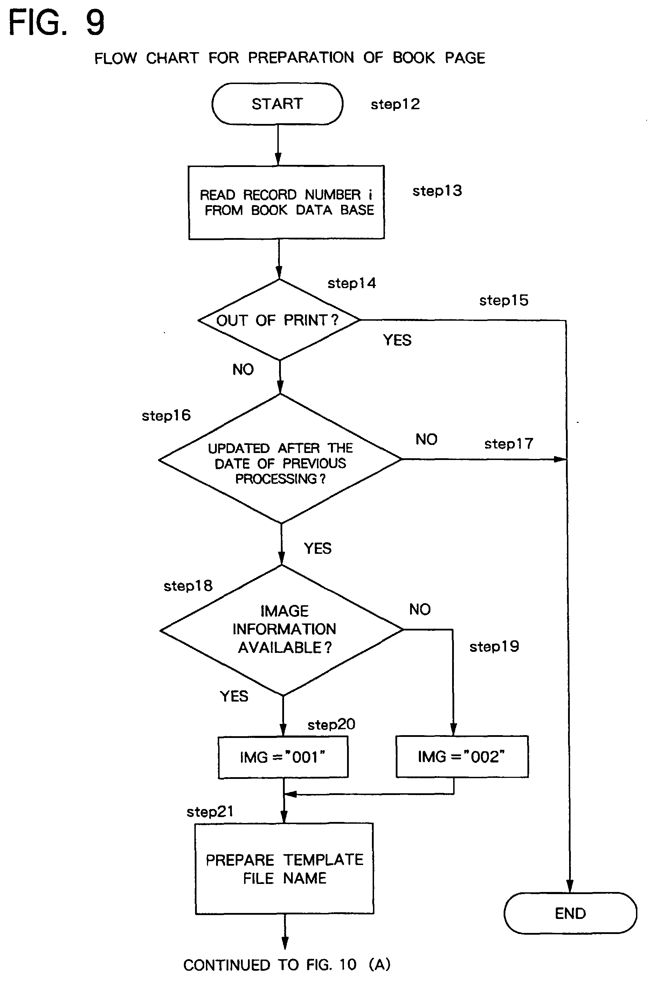

If the number of records thus read does not reach the total number of records in Step 9, it proceeds to Step 11. In Step 11, automatic preparation processing of book page is performed to a record number i. The details of this processing will be described below referring to Fig. 9.

Fig. 9 is a flowchart to show operation of the automatic preparation program 14 of the book page. At first, it proceeds from Step 12 to Step 13, and the record number i is read from the book data base to a memory 3. In Step 14, it is judged whether the book is currently out of print or not. In case "out of print flag" is 1, it proceeds to Step 15, and the processing procedure is terminated.

In case it is judged as "not out of print" in Step 14, it proceeds to Step 16, and it is judged whether the record has been updated or not after the previous processing data based on the data of "record updating date". In case it is not updated, it proceeds to Step 17, and the processing procedure is terminated.

In case the data has been updated after the previous processing date in Step 16, it proceeds to Step 18. In Step 18, it is judged whether there is image information in the data.

In case there is image information in Step 18, it proceeds to Step 20, and a value of IMG="001" is set to a variable, which sets presence or absence of the image data. In case there is no image information, it proceeds to Step 19, and it is set to IMG="002" in the same manner.

Next, in Step 21, a template file already prepared is loaded by a template name, which has been selected according to whether the image data is present or not. In Step 22, the data of each item in the book data base (18 items of the book data base are shown in Fig. 10) is applied to the corresponding item in the template file according to the display element correspondence table, and processing is performed as j=1 to j=18.

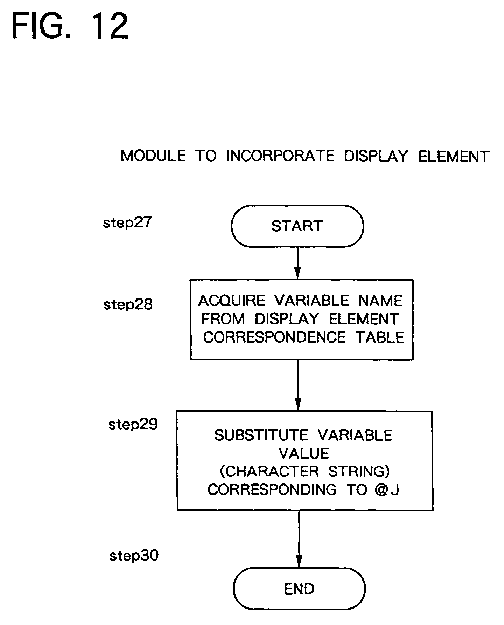

In Step 23, it is judged whether it has been written up to j=18 or not. In case j is less than 18 in Step 23, it proceeds to Step 26, and the contents data of the book page is prepared by incorporating the next display element. The detailed processing will be described below referring to Fig. 12.

Fig. 12 is a flowchart to show display element incorporating module. When it proceeds from Step 27 to Step 28, a variable name is acquired from the display element correspondence table shown in Fig. 6. Next, in Step 29, a value of variable (character string) corresponding to item name is substituted, and the processing procedure is terminated in Step 30.

When the above procedure has been completed, it is turned to the procedure of Step 26 in Fig. 10, and the processing of Steps 22, 23 and 26 is reiterated until j is turned to 16. When j is read up to 16, it proceeds to Step 24. Contents file is written, and processing is terminated in Step 25. In this case, the contents file name of the book page is to be ISBN number + ".HTM", and it is acquired in Step NM. When this procedure is completed, it is turned to Step 11 in Fig. 3, and loop processing in Steps 9 and 11 is reiterated until i=1 to j=LOF (total number of records). Then, it proceeds to Step 31, and the data is updated, and processing is terminated in Step 32. By the above processing, the book page is prepared.

Next, by running the menu page preparation program in the automatic preparation program 14, a menu page is prepared. The menu page comprises book menu pages of major classification, minor classification, and individual minor classification.

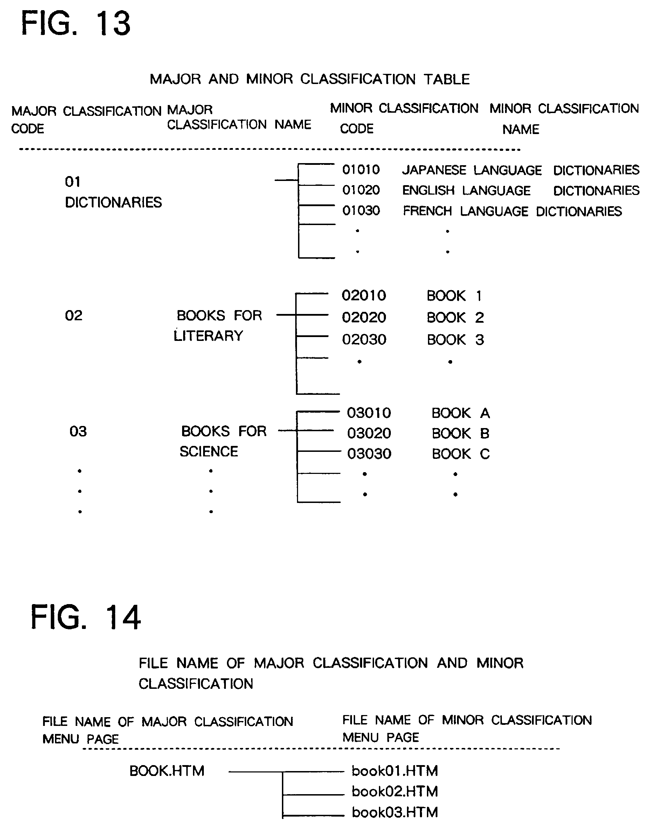

Fig. 13 shows a major classification table and minor classification table of books. Book classification code comprises 5 digits in total. Upper two digits indicate major classification, and the entire 5 digits represent minor classification. For example, a major classification code "01" represents "dictionary", and a minor classification code "01010" indicates "Japanese language dictionary" among the dictionaries. Further, a minor classification code "01020" indicates "English language dictionary" among the dictionaries. In this way, major classification and minor classification constitute a type of hierarchical structure.

Fig. 14 gives description examples of file names of major and minor classifications. File name on the menu page of major classification is set to: BOOK.HTM. Minor classification menu pages corresponding to "01", "02", "03", ...... of major classification codes are set to BOOK01.HTM, BOOK02.HTM, BOOK03.HTM, ..... respectively. In case the protocol is RIP, HTM is replaced with RIP.

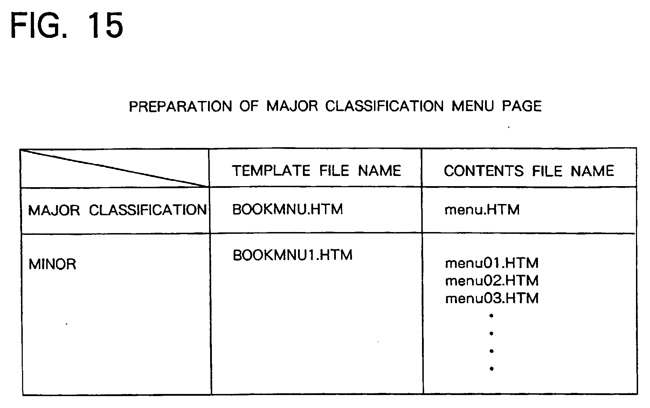

Fig. 15 shows template file names and contents file names in major and minor classifications. Major classification template file is set to "BOOKMNU.HTM" if the contents are in HTML. It is set to "BOOKMNU.RIP" if the contents are in RIP. For the minor classification template file, a number is added as "BOOKMNU1.HTM" to discriminate from major classification file.

Major classification contents file name is set to "MENU.HTM" if the contents are in HTML. If the contents are in RIP, HTM is replaced with RIP. The subsequent minor classification contents file names are set to "MENU01.HTM", "MENU02.HTM", ..... by adding major classification code number. If the contents are in RIP, HTM is replaced with RIP.

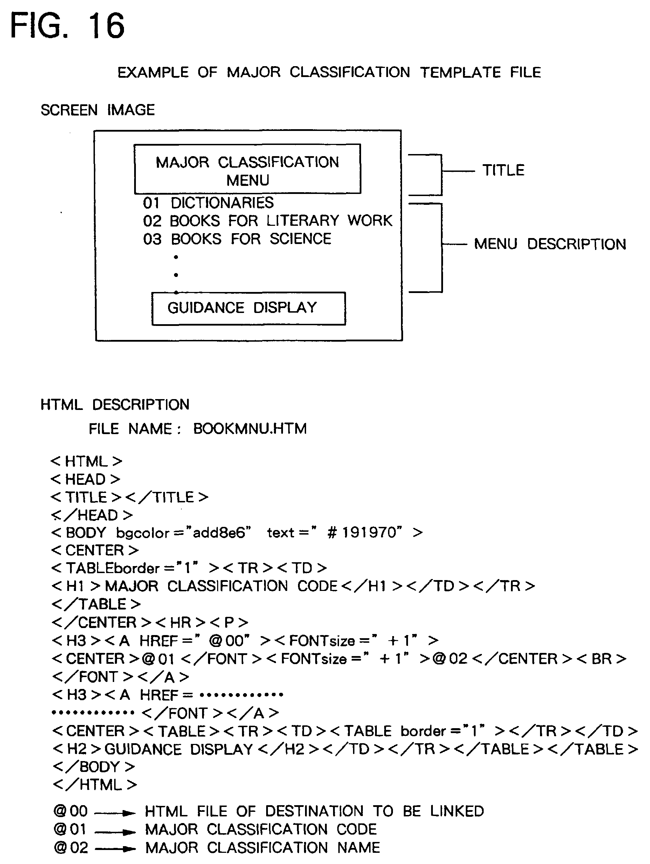

Fig. 16 shows screen image of major classification, template file and HTML description. In the screen image, a title is first displayed, and a menu description with major classification code is displayed. Under the screen image, guidance information relating to the above display is given.

In HTML description of menu line relating to each major classification, it is designed in such manner that HTML file name of the destination to be linked is set to @00, major classification code is set to @01, and major classification name is set to @02.

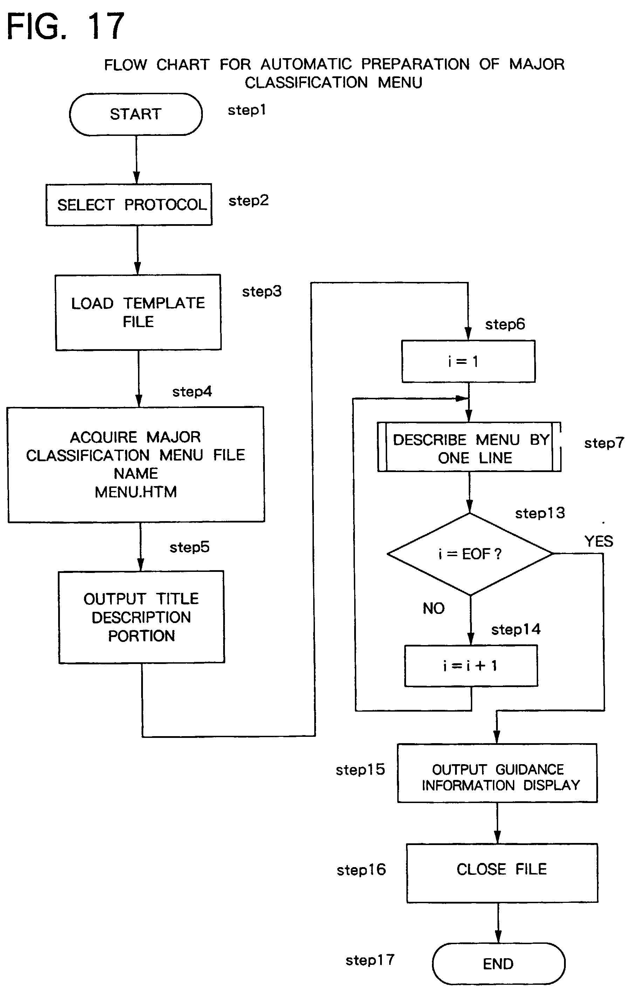

Fig. 17 is a flowchart in case menu page of major classification is automatically prepared. Here, it is assumed that the system has been already started. When it proceeds from Step 1 to Step 2, protocol is selected, and the operator selects RIP or HTML from the console. In Step 3, template file of major classification menu is loaded.

In Step 4, file name of major classification menu (such as MENU.HTM, etc.) is acquired. In Step 5, title description part is outputted.

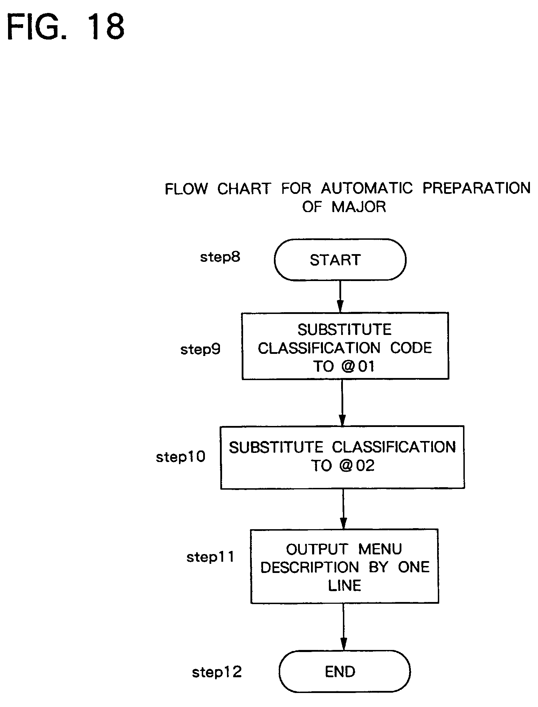

In Step 6, the loop counter is initialized, and i is turned to 1. First, in case i=1, it proceeds to Step 7, and the menu is described by one line. Regarding this procedure, detailed description will be given below in connection with Fig. 18.

In Fig. 18, it proceeds from Step 8 to Step 9, and major classification code is described at "@01". In Step 10, major classification name is substituted at @02. In Step 11, menu is described by one line and is outputted. Then, it proceeds to Step 12, and the procedure is terminated.

Here, returning to Step 7 in Fig. 17, it proceeds to Step 13, and it is judged whether it has been described up to i=EOF. If i=EOF is not yet reached, 1 is added to i, and it goes back to Step 7, and the menu is described by one line again. When i=EOF is reached, it proceeds to Step 15, and guidance display on the menu page is outputted. Subsequently, the file is closed in Step 16, and the procedure is terminated in Step 17. In this way, the menu page of major classification is prepared.

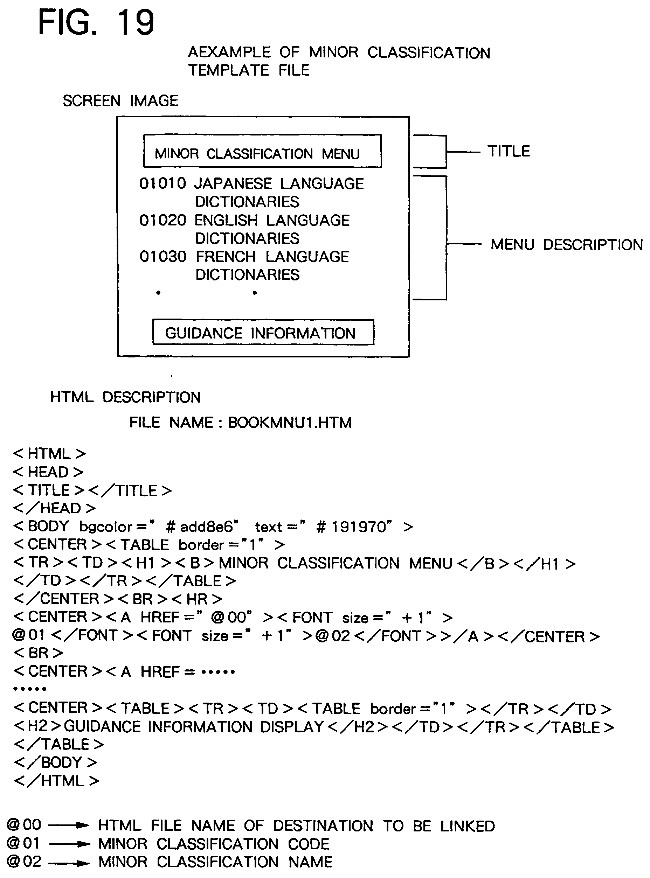

Fig. 19 shows screen image of minor classification template file and HTML document. In the screen image, the title is displayed at first, and menu descriptions with minor classification codes are displayed. Under the screen, guidance information relating to the above display is shown.

In HTML document, HTML file name of the destination to be linked is given at @00 so that it is linked to book page. Minor classification code is set to @01, and minor classification name is set to @02.

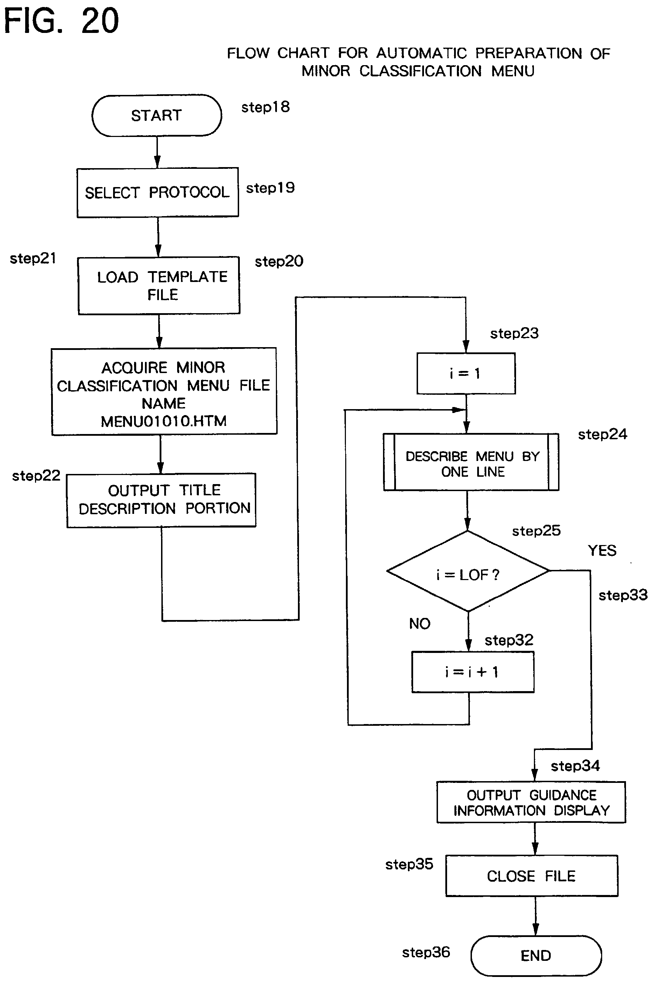

Fig. 20 is a flowchart in case minor classification menu page is automatically prepared. Here, it is assumed that the system has been already started. When it proceeds from Step 18 to Step 19, protocol is selected, and it is selected whether it is RIP or HTML. In Step 20, minor classification template file is loaded.

In Step 21, minor classification file name (such as MENU01010.HTM) is required. In Step 22, title description part is outputted.

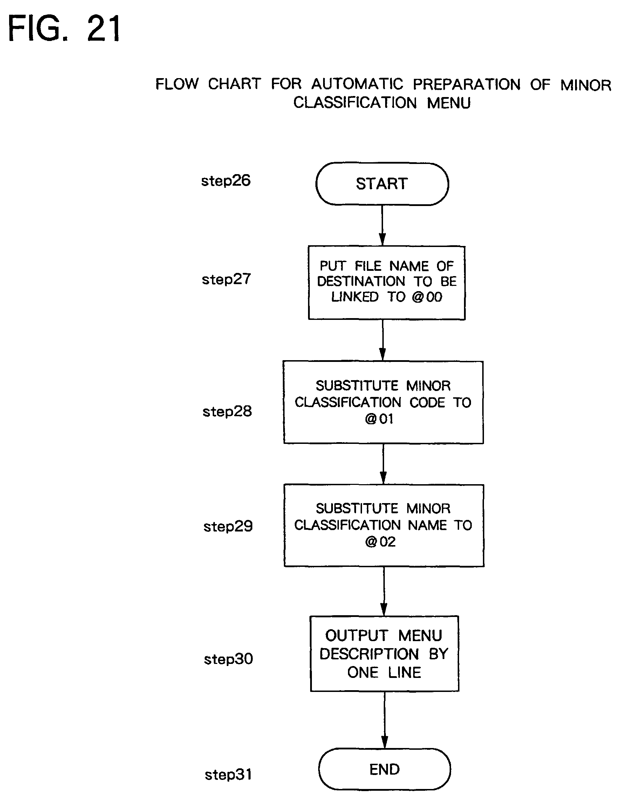

In Step 23, the loop counter is initialized so that i=1. First, when i=1, it proceeds to Step 24, and menu is described by one line. On this procedure, detailed description will be given below referring to Fig. 21.

In Fig. 21, it proceeds from Step 26 to Step 27, and file name of the destination to be linked is given at @00 so that it is linked to book page. In Step 28, minor classification code is substituted to "@01". In Step 29, minor classification name is substituted to @02. In Step 30, menu is described by one line and it is outputted. Turning to Step 31, the procedure is terminated.

Here, going back to Step 24 in Fig. 20, it proceeds to Step 25, and it is judged whether it has been described up to i=EOF. If i=EOF is not yet reached, it proceeds to Step 32, and 1 is added to i, and it goes back to Step 24, and the menu is described again by one line. When i=EOF is reached in Step 25, it proceeds from Step 33 to Step 34, and guidance information of the menu page is outputted. Subsequently, the file is closed in Step 35, and the procedure is completed in Step 36. In this manner, minor classification menu page is prepared.

After minor classification menu page has been prepared, individual minor classification book menu page is prepared in the lower hierarchy. Further, in the hierarchy under the individual minor classification book menu page, each book page is prepared.

In this case, individual minor classification book menu pages are prepared as follows:

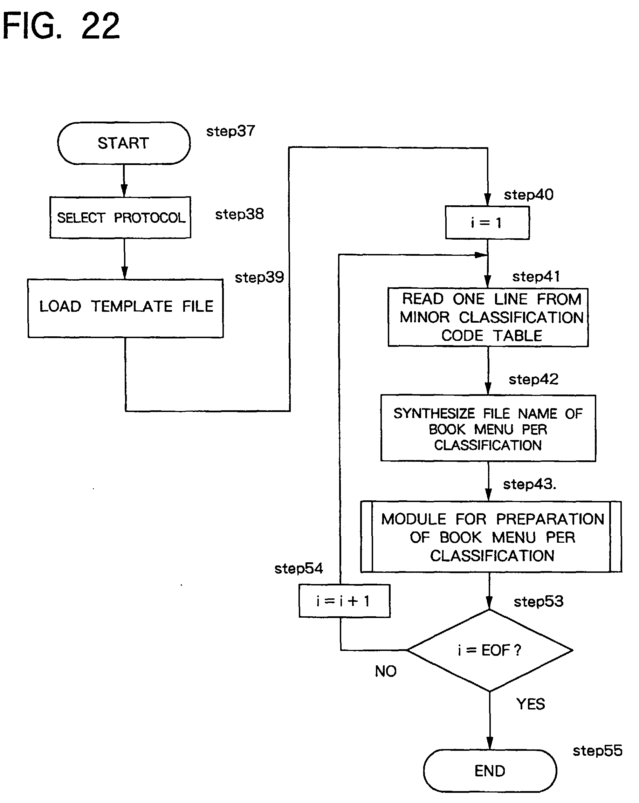

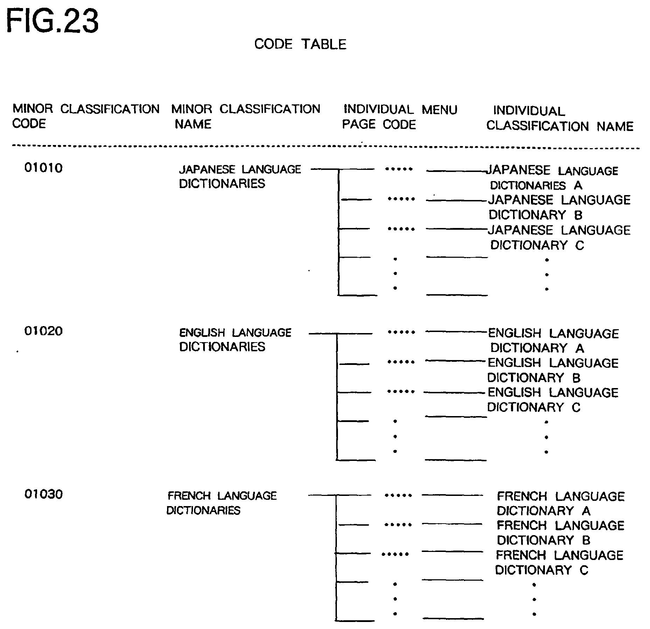

Fig. 22 is a flowchart in case individual minor classification book menu pages are automatically organized and prepared. It proceeds from Step 37 to Step 38 and protocol is selected, and it is selected whether it is HTML or RIP. In Step 39, template file of individual minor classification book menu page is loaded. In Step 40, loop counter is initialized so that i=1. Then, the loop from Step 41 to Step 54 is reiterated as many times as the number of records on individual minor classification book menu page. In Step 41, code number, individual classification name, etc. of individual minor classification book menu page are read one after another from the code table as shown in Fig. 23 line by line. In Step 42, file name of book menu per classification is prepared.

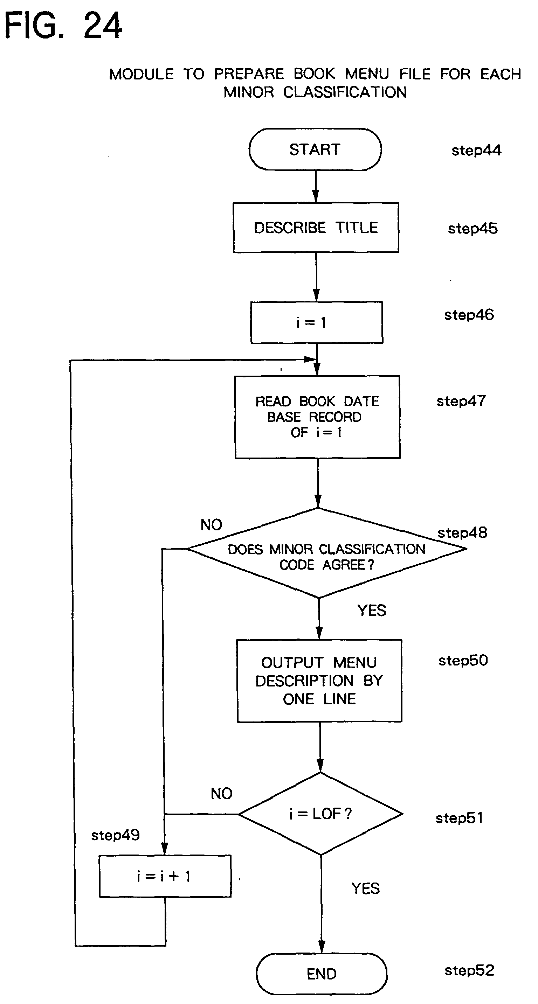

In Step 43, book menu per classification is prepared. Description will be given now on this step referring to Fig. 24. In Fig. 24, it proceeds from Step 44 to Step 45, and the title shown on screen image is described and it is then outputted. In Step 46, loop counter is initialized so that i=1. Next, the loop from Step 47 to Step 49 is reiterated. First, in Step 47, book data base record of i=1 is read. In Step 48, it is checked whether minor classification code agrees with individual minor classification book menu page code or not. If it does not agree, it proceeds to Step 49, and further, to Step 47 and Step 48.

In case minor classification code is consistent with individual minor classification book menu page code in Step 48, it proceeds to Step 50, and menu description of screen image is described by one line and is outputted. Next, it proceeds to Step 51, and it is checked whether it has been read up to the final record, and it is then outputted.

In case the final record is not yet reached, it proceeds to Step 49. The next value is substituted in i, and it goes back to Step 47, and the same step is repeated again. In case the final record has been reached, it proceeds to Step 52, and the procedure of this processing is terminated.

Subsequently, it goes back to Step 43 in Fig. 22 and then to Step 53. Then, it is judged whether the end of the file has been reached or not. In case the end is not yet reached, it goes to Step 54. The next value is substituted in i, and it goes back to Step 41, and the same process is reiterated. In case the end of the file has been reached in Step 53, it proceeds to Step 55, and the procedure of this processing is terminated.

After major classification and minor classification menu pages, individual minor classification book menu pages and book pages in the lower layer have been prepared and in case protocol is HTML, HTTPD 13 is run so that the prepared menu page can be outputted to Internet 7. In case the protocol is RIP, the personal computer communication host program 17 is run so that the prepared menu page is outputted to on-line system 7.

In the above, description has been given on a method, by which the user can find the desired book page from menu page. Next, description will given on data base retrieval system for preparing menu page of the book desired by the user by inputting key words.

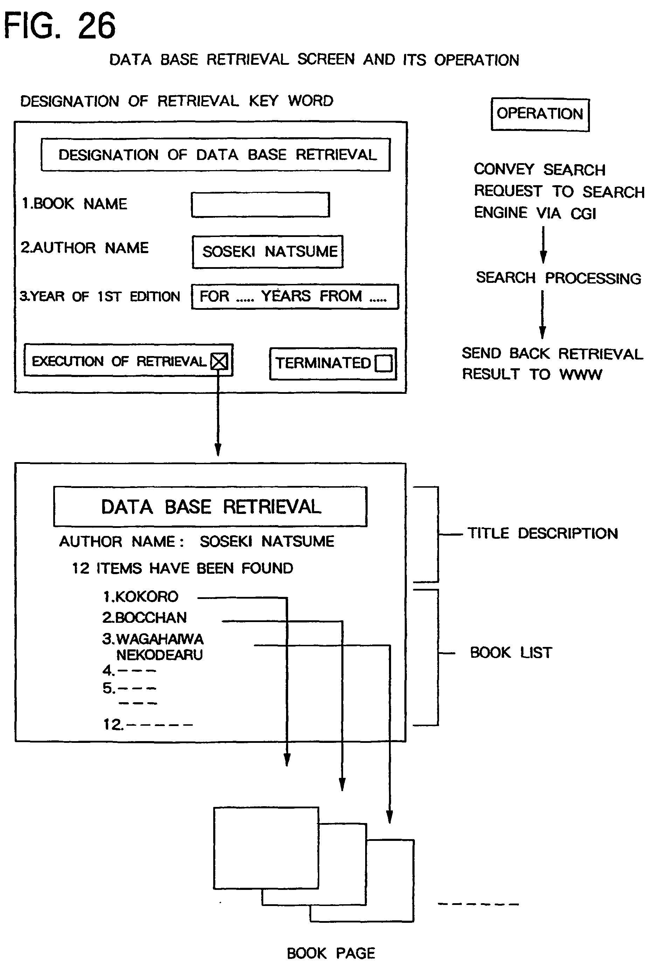

Fig. 26 shows a data base retrieval screen and its operation. First, the retrieval screen is designed in such manner that book name, author name, year of the first edition, etc. can be inputted and that retrieval can be carried out even when a part of key words has been inputted. When the key words are inputted, and button for retrieval execution is clicked, retrieval request is transmitted to the book data base retrieval system 15 by CGI. The book data base retrieval system 15 performs retrieval processing according to the retrieval request, and retrieval result is outputted to WWW.

As a result, the picture of the retrieval result is displayed. On the retrieval result screen, the inputted key word is indicated at first, and it is displayed how many results have been obtained, and the resultant book list is displayed. Each of the book lists is linked to each of book pages.

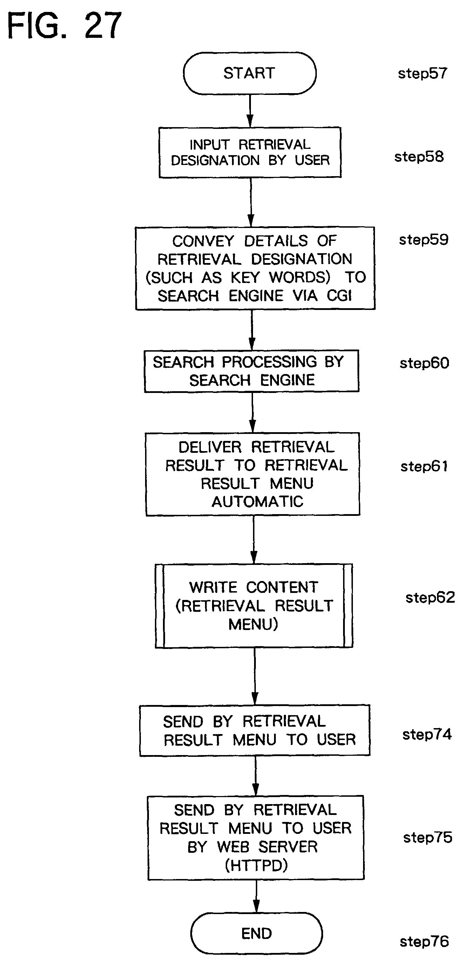

Fig. 27 is a flowchart in case the book data base retrieval system 15 performs retrieval processing. From Step 57 to Step 58, the user inputs retrieval items. In this case, for the operation in the system 1 shown in Fig. 1, the user inputs retrieval character from the key board 5 to the console 4. Next, in Step 59, key words and the like are transmitted to the book data base retrieval system 15 by CGI. In Step 60, the book data base retrieval system 15 performs retrieval processing according to the book data base 10. In Step 61, the book data base retrieval system 15 outputs the retrieval result so that it can be processed by the automatic preparation program 14. There are two types of retrieval results: key word item number file (2) which indicates how many items corresponding to the key word have been retrieved, and retrieval result list file (1) which indicates the retrieval result in detail.

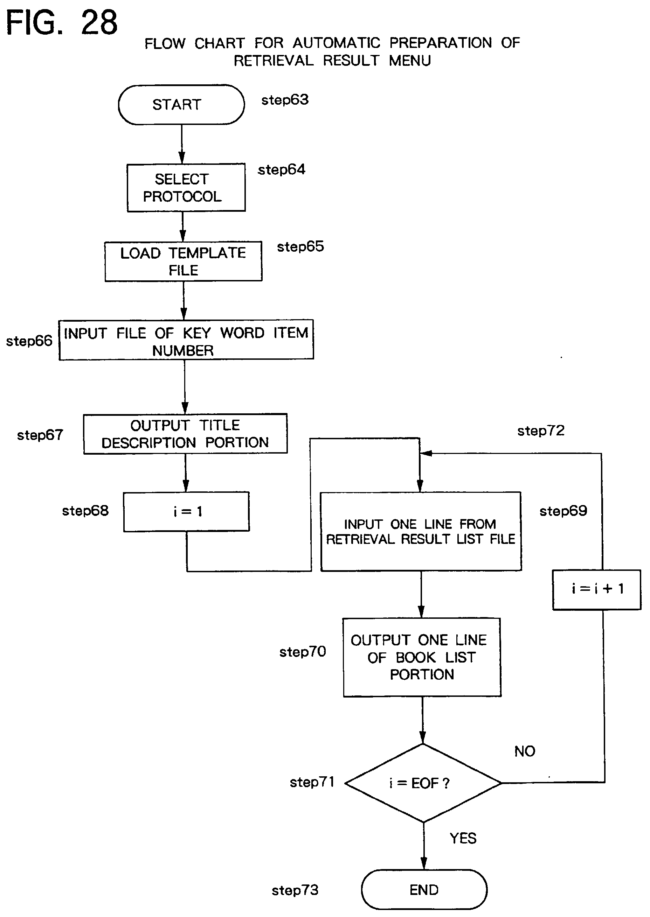

In Step 62, the automatic preparation program 14 prepares a retrieval result menu. This process will be described in detail referring to Fig. 28. When it proceeds from Step 63 to Step 64, protocol is selected, and HTML or RIP is selected. In Step 65, template file is loaded. In Step 66, the key word item number file (2) is inputted, and the title description part of Fig. 26 is outputted in Step 67. In Step 68, loop counter is initialized so that i=1 is reached. In Step 69, the retrieval result list file (1) is inputted by one line, and book list portion is outputted by one line in Step 70. In Step 71, it is judged whether the end of the file has been reached or not. In case the end of the file is not reached, it proceeds to Step 72. The next value is substituted to i, and the procedure from Step 69 is reiterated. In case the end of the file has been reached, it proceeds to Step 73, and the procedure is terminated.

Then, it goes back to Step 62 and proceeds to Step 74. Here, contents 11 are written, and retrieval result menu is prepared. Individual book pages linked from the retrieval result menu have been prepared each time in the past. In the present embodiment, the book pages already prepared are used, and the book page can be linked within short time, and there is no need to automatically prepare the book page, and this reduces burden on the server. The retrieval result list file is erased at the completion of retrieval by the user.

In Step 75, HTTPD (WWW server program) 13 outputs the retrieval result menu to Internet 7 via the router 6 and transfers it to the user, and the procedure of this processing is terminated in Step 76. Or, in Step 75, the personal computer communication host program 17 outputs the retrieval result menu to telephone network via the modems 18A and 18B and transmits it to the user, and the procedure of this processing is terminated in Step 76.

Further, in case an electronic catalog is prepared on CD-ROM for on-line system, contents data in HTML is written on a master CD-R by the CD-R writer 8. As a result, a large number of CD-ROMs produced by pressing from the master CD-R are distributed to the users, and the users can see the electronic catalog on browser by setting it in CD-ROM drive.

According to the above arrangement, the information processing system for preparing a given digital contents uses descriptive language of HTML, RIP or the other protocol, and it is provided with menu page automatic preparation means and commodity page automatic preparation means, and it is possible to automatically prepare menu pages and commodity pages. By the above means, it is possible to update within minimal time and to promote retroactive effect, to avoid erroneous linking, and to reduce personnel and labor cost. Further, there are such effects that the burden on server is reduced and good interchangeability between protocols can be ensured.

The menu page automatic preparation means and commodity page automatic preparation means as described above are accomplished by operation of CPU 2 in Fig. 1, and this also applies to the embodiments described below.

### (2) 2nd embodiment

In the second embodiment of the present invention, description will be given on a case where digital contents are automatically prepared according to the data base relating to clothings in clothing stores so that the user can perform on-line shopping.

In the system of the present embodiment, the same arrangement as in the system of the first embodiment as described above is referred by the same symbol, and detailed description is not given here.

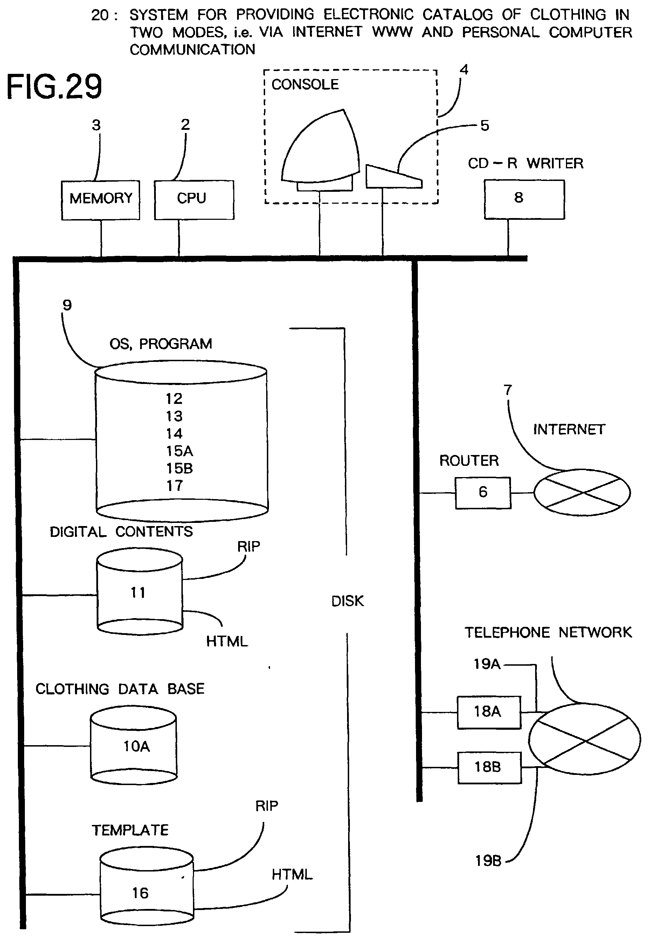

Fig. 29 is a block diagram of a system 2, in which an electronic catalog of clothings is provided in two modes, i.e. WWW on Internet and personal computer communication, and the user can perform on-line shopping. In this system, the devices from CPU 2 to disk 9 indicate the same devices, which perform the same operation.

A clothing data base 10A comprises names and photographs of commodities in a clothing store such as coats, sweaters, shirts, underwear, shoes, bags, hats, etc., code numbers of these commodities within the clothing store, date of new sale of the commodities, inventory, date of deposit in stock, disposition suitability such as color, pattern, size, design, photograph, etc. (to be described later), and date of recording, date of the last updating, etc., and these are stored in a hard disk.

From the contents 11 to the automatic preparation program 14, the same operation is performed as in the first embodiment. A clothing data base retrieval system 15A is a system for retrieving a clothing desired by the user based on the data, i.e. item elements of each clothing (e.g. color pattern, size, etc. of coat, sweater, etc.), and it has a function to prepare a summarized page of the retrieval result. From the retrieval result summarized page, linkage is made to each of the commodity pages indicating detailed information on each commodity.

A custom template preparation program 15B is a program for extracting custom templates from the commodity page partially prepared in manual manner.

Template 16 to modems 18A and 18B are the same devices and perform the same operation as in the first embodiment.

As described above, in the present embodiment, the automatic preparation program 14 automatically prepares clothing pages and menu pages and offers on-line shopping information on clothing to terminal equipment of the user via Internet 7 or via telephone network.

In the above arrangement, the automatic preparation program 14 automatically selects a template of an optimal screen layout depending on disposition suitability of the photograph relating to the disposition of each display element of the commodity page offering shopping information on clothing, and it automatically prepares commodity page with layout of the best balance. Based on this program, the user who has gained access via WWW or personal computer communication reads the menu pages and commodity pages and purchases the clothing.

The photographs of the clothings are divided to those at longitudinal position (portrait) or at lateral position (landscape). Depending on the conditions such as rightward facing, leftward facing or direction of visual line of the model, the photographs are classified to those suitable for the disposition at the right side portion of the screen, and those suitable for the disposition at the left side. Further, for hats and shoes, it is natural to dispose at upper or lower portions of the screen respectively. The feature of the photographs in the disposition on the screen as described above is called "disposition suitability".

In case the photograph is disposed at an optimal position on the screen, disposition of the other display elements such as commodity title, commodity specification, copy phrase (for publicity), etc, also undergo the influence. In the present embodiment, such function is provided that a plurality of templates are prepared in advance to match photographs of a wide variety of disposition suitability, and the optimal template is selected to match the disposition suitability of the photograph of the clothing.

Items in "photograph disposition suitability" of the clothing data base 10A are the items to maintain information of the disposition suitability of the above photograph. In the photograph disposition suitability items, a plurality of disposition suitability codes are maintained with spacing between them. Operator finds an image of the photograph and determines disposition suitability code, and this disposition suitability code is inputted in advance at the time of data inputting.

The disposition suitability code is a coding of shape of the photograph (such as portrait, landscape) and disposition suitability. In the embodiment, it is defined in Table 2 as given later. Not only photographs but also other image data such as illustration, sketch, etc. can be handled in the same manner.

For example, in case it is a photograph of portrait type and it is suitable for disposition at right side, the value of the disposition suitability item is:
"PORT RT".

In case it is a photograph of landscape type and it is suitable for disposition at downward position, it is:
"LAND DN"

In some cases, after commodity page of clothing has been automatically prepared, HTML document may be partially changed manually and the layout may be changed. The template manually changed is called "custom template". Once changed, the custom template is automatically stored, and it is used as a template when it is automatically prepared at the next automatic preparation. The custom template is prepared in the following manner:

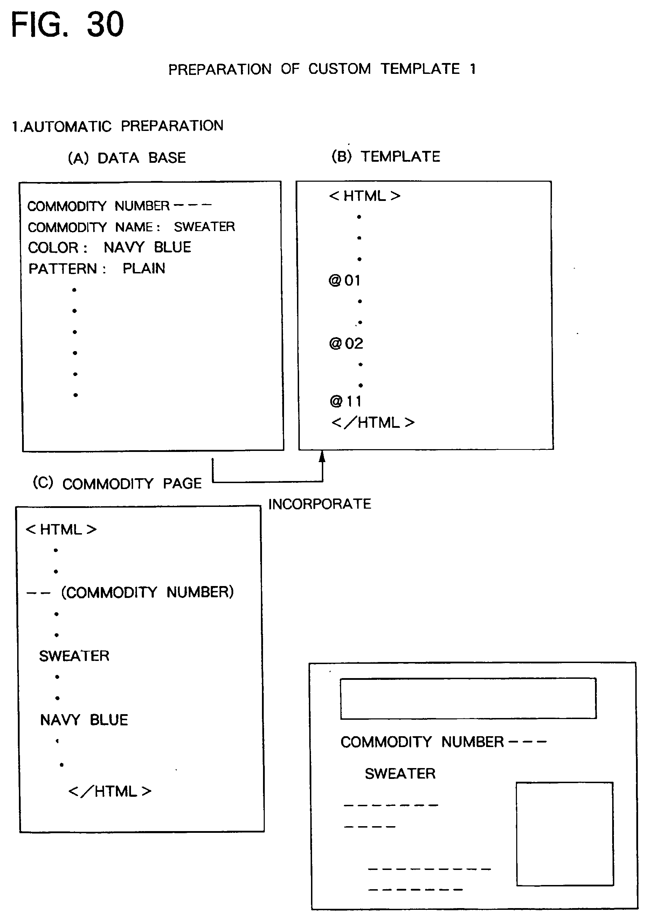

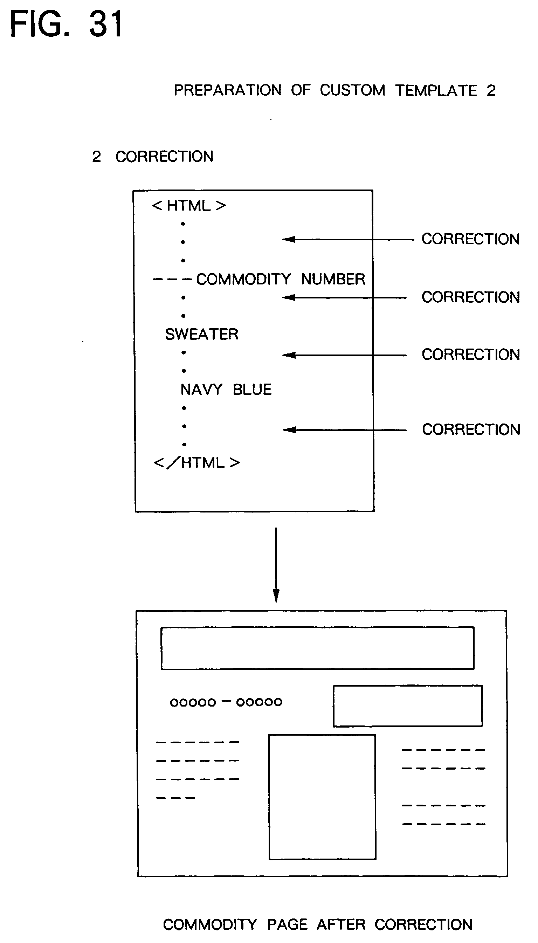

Figs. 30, 31 and 32 each represents a process to prepare custom templates. First, data (A) of the commodity data base is incorporated in a template (B), and a commodity page (C) is prepared. Then, as shown in Fig. 31, a designer manually corrects HTML document of the commodity page and prepares a commodity page of the new layout. The data portion derived from the data base is maintained without change.

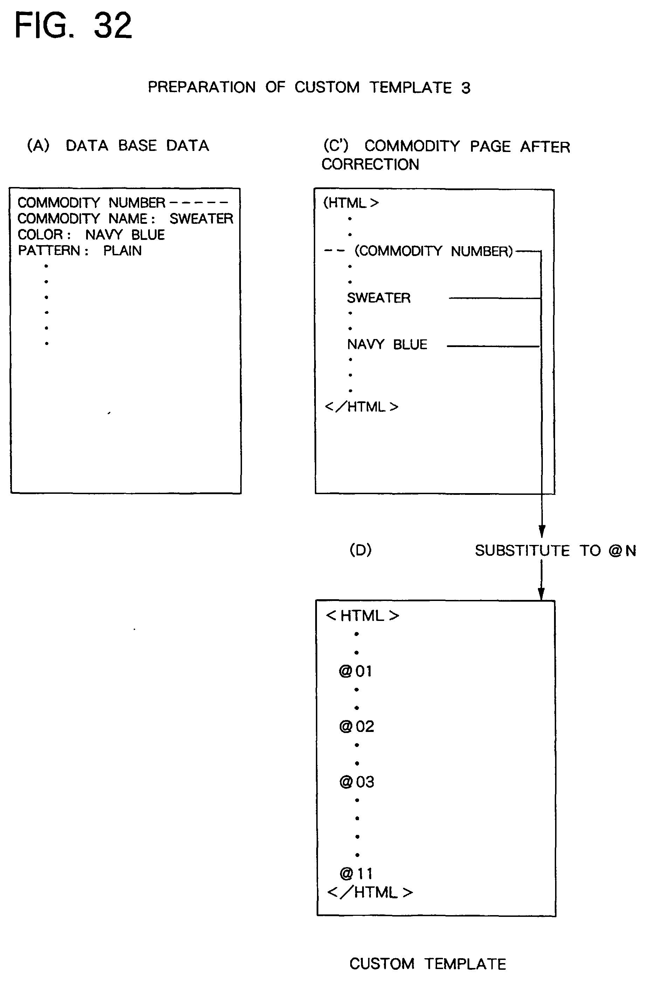

Next, turning to Fig. 32, a custom template (D) is extracted from the corrected commodity page. Each of the item data such as commodity number, commodity name, etc. in (C') are replaced with @01, @02, @03, ...... In this manner, the custom templates (D) are prepared and stored. Then, file name of the custom template is entered at custom template item in the data base.

In the automatic preparation processing, whether normal template is used or custom template is used is determined by the presence or the absence of the data in the custom template at the time of automatic preparation. In case the data is present, the custom template is used. In case there is no custom template, a normal template is used.

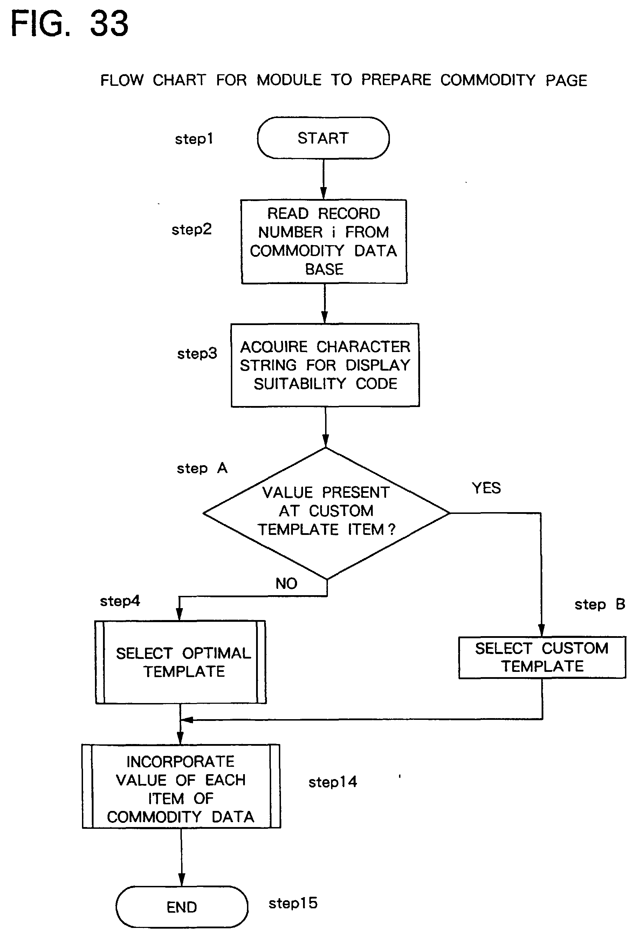

Fig. 33 is a flowchart in case commodity pages of clothing are automatically prepared. In this flowchart, the system is started in advance, OS is loaded, and the automatic preparation program is started.

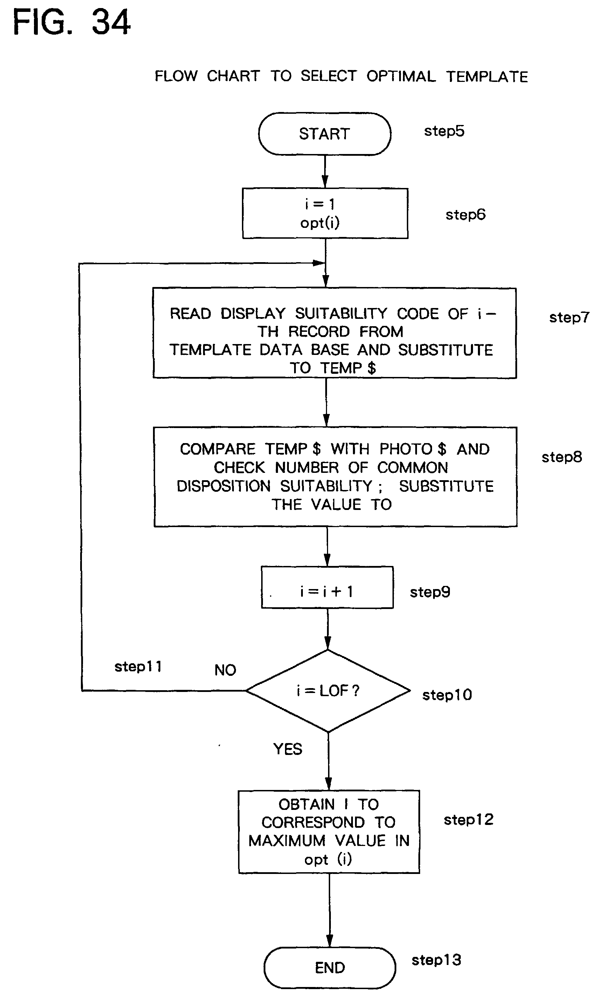

Turning from Step 1 to Step 2, a record number i is read from the commodity data base. In Step 3, item character string of the photo disposition suitability code is acquired, and it is retained at character variable photo$. In Step A, it is judged whether the custom template has a value or not. If no value, the optimal template is selected in Step 4, and the procedure after Step 14 is followed. On the detailed flowchart in Step 4, description will be given referring to Fig. 34. If there is a value, it proceeds to Step B, and a custom template is selected. Then, turning to Step 14, the value of each item in the commodity data base is incorporated in the template and pages are prepared. In Step 15, the procedure of this processing is terminated.

Next, the same procedure as from Step 22 to Step 26 in Fig. 10 is reiterated, and the procedure of this processing is terminated in Step 15.

In the above template, optimal layout of the display elements on the screen is acquired to every possible combination of the disposition suitability codes, and this is retained as a template. Information of the template group (such as template file name, corresponding photo disposition suitability, etc.) is stored in the template data base. The value of photo disposition suitability corresponding to each template is stored in items of the template suitability code in the template data base.

Similarly to the display suitability code, the template suitability code is described, for example, as:
"PORT RT"

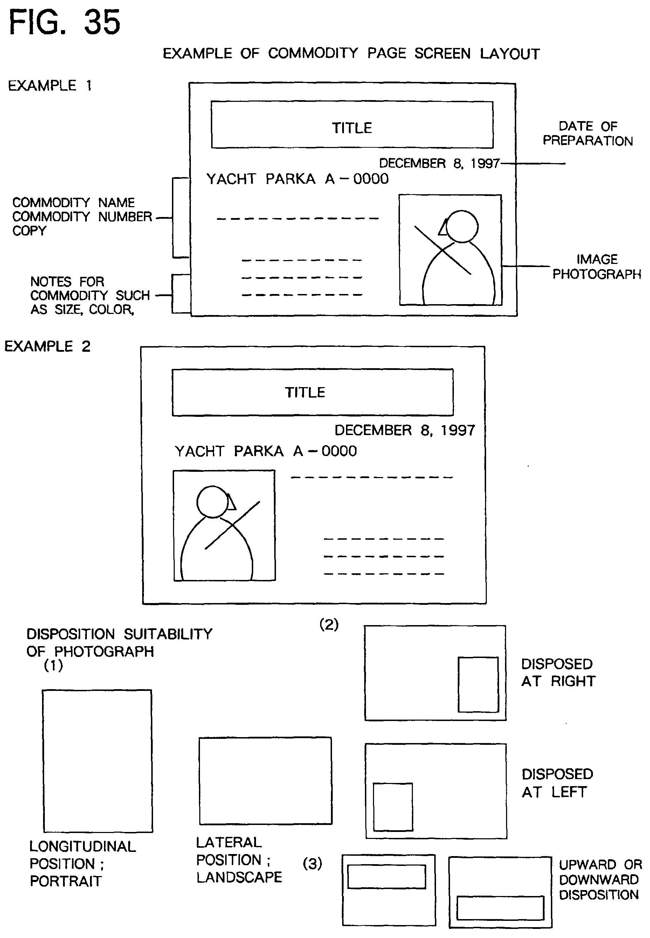

In the example shown in Fig. 35, disposition suitability of the photograph is "portrait, rightward disposition". Fig. 34 shows a layout of a commodity page, and the user can perform on-line shopping based on this screen. This commodity page comprises title, commodity name, commodity number, copy, commodity explanation, size, color, pattern, photographic image, background, etc.

Table 1 summarizes disposition suitability codes, which are given by coding of photograph shape and disposition suitability as described above.

**Table 1**

| Disposition suitability code | |
|---|---|
| Disposition | Display |
| Portrait | PORT |
| Landscape | LAND |
| Rightward disposition | RT |
| Leftward disposition | LT |
| Up disposition | UP |
| Down disposition | DN |

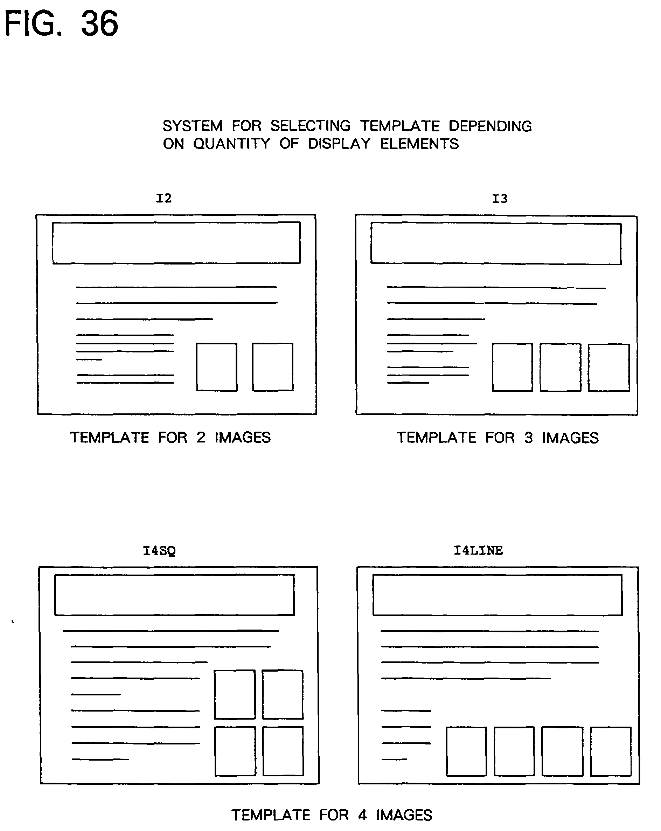

Table 2 indicates the following procedure. Here, I2, I3, 14SQ, 14LINE each represents quantity and disposition of photographic image as shown in Fig. 36. I2 represents a screen image when two images are aligned in lateral direction, I3 represents a screen image when three images are aligned in lateral direction, 14SQ represents a screen image when four images are aligned in longitudinal and lateral directions, and 14LINE represents a screen image when four images are lined up in a row in lateral direction. First, from "photo$", display suitability code is extracted one by one. Then, it is detected whether the extracted code is included in the template suitability code or not. If the code is included, 1 is added to "opt" value (variable). This procedure is performed for all of the codes, and the template with the highest "opt" value is selected. By this procedure, the optimal template is selected. A flowchart showing the details is given in Fig. 34.

**Table 2**

| PORT RT ←Display suitability code | | |
|---|---|---|
| Template number | Display suitability code of template | opt value |
| 1 | PORT UP | 1 |
| 2 | PORT DN | 1 |
| 3 | PORT RT | 2 |
| 4 | PORT LT | 1 |
| 5 | LAND UP | 0 |
| 6 | LAND DN | 0 |
| 7 | LAND RT | 0 |
| 8 | LAND LT | 0 |
| 9 | LAND LT I2 | 0 |
| 10 | LAND LT I3 | 0 |
| 11 | LAND LT I4 | 0 |
| 12 | LAND LT I5 | 0 |
| . | . | . |
| . | . | . |
| . | . | . |
| . | . | . |

When turning from Step 5 to Step 6, counter variable is initialized, and it is turned to i=1. Array opt (i) value is defined, and it enters into a loop to obtain opt value for all templates.

Next, turning to Step 7, display suitability code of i-th record is read from the template data base, and this is substituted to temp$. In Step 8, a number of the disposition suitability codes common to temp$ and photo$ is determined. This value is substituted in opt (i).

In Step 9, 1 is added to the i value. In Step 10, it is judged whether the final file has been reached or not. In case the final file is not yet reached, it is turned to Step 11, and the procedure from Step 7 is reiterated. In case the final file has been reached, it is turned to Step 12, and the value of i corresponding to the maximum value in opt (i) is obtained. Then, turning to Step 13, the procedure is terminated.

Then, it proceeds to Step 14 in Fig. 33, and the values of each item in the commodity data base are incorporated in the template, and pages are prepared. In Step 14, processing is performed by the same procedure as from Step 22 to Step 26. First, by the loop counter, the number of data from j=1 is counted. Here, data value j comprises 11 items of the clothing data base in Table 3. In case j is less than 11, it is turned to display element incorporation shown in Fig. 12, and the procedure from Step 22 is reiterated. In case j exceeds 11, HTML is written in Step 24, and it is turned to Step 25, and the procedure of this processing is terminated. As a result, image disposition such as photographs is optimized, and menu pages and commodity pages of clothing are automatically prepared.

**Table 3**

| Structure of clothing data base | | |
|---|---|---|
| Item number | Variable name | Item name |
| 1 | Number | Commodity number |
| 2 | Name | Commodity name |
| 3 | Color | Color |
| 4 | Gara | Pattern |
| 5 | Size | Size |
| 6 | Date | Date of sales launching |
| 7 | Copy | Publicity copy phrase |
| 8 | Price | Price |
| 9 | Image | Image file name |
| 10 | Code | Display suitability |
| 11 | Custom | code |
| | | Custom template |

In the automatic preparation system of the present embodiment, not only automatic preparation is performed by optimizing disposition of display elements having suitability and features on the layout, but also the designer can correct the layout when necessary, and the corrected layout can be stored even at the subsequent updating of the data.

Further, in the automatic preparation program 14 of the present invention, automatic preparation and differential updating can be performed only for the record, which has been newly set after previous automatic preparation or only for the updated record.

With the arrangement as described above, in a system to provide shopping information for clothing in two modes, i.e. via WWW on Internet and via telephone network, display elements such as photographs are optimized and disposed according to the automatic preparation system 14, and menu pages and commodity pages are automatically prepared.

### (3) 3rd embodiment

In the third embodiment of the present invention, in case an electronic catalog for books in the first embodiment is prepared, the arrangement of individual minor classification book menu page is changed and displayed. In a system according to the present embodiment, the same arrangement in the system of the first embodiment is referred by the same symbol, and detailed description is not given here.

In the present embodiment, the system arrangement is the same as in the first embodiment, and description will be given referring to Fig. 1 of the first embodiment. In this sense, the arrangement from the system 1 to HTTPD 13 is the same, and detailed description is not given here.

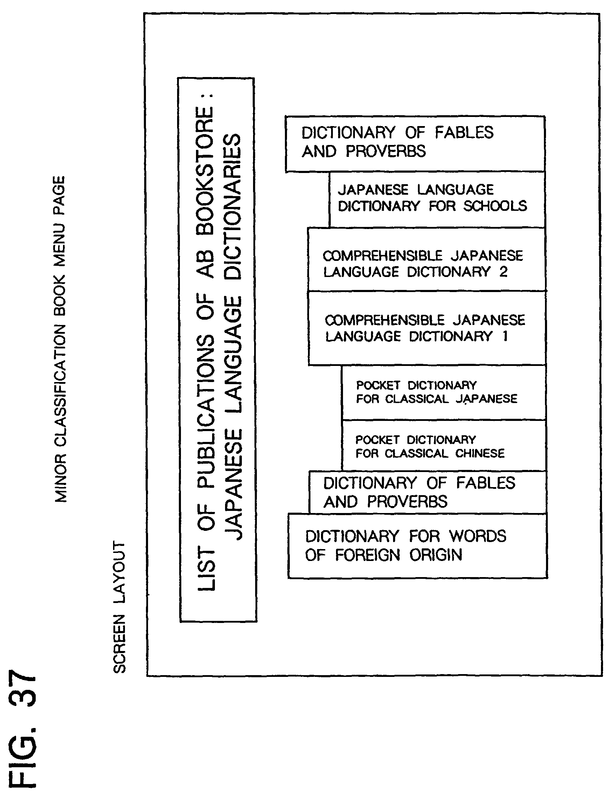

In the automatic preparation program 14, major classification menu pages, minor classification menu pages, and further, menu pages of books belonging to individual minor classification are prepared, and menu pages in three hierarchies can be prepared at one time. In the menu pages of the books belonging to individual minor classification, an image of a book shelf with books in a bookstore is applied as shown in Fig. 37. By clicking the back cover of each individual book, it is linked to a book page of the next hierarchy. Because books are searched on an image of a book shelf with books as found in a bookstore, each individual book can be easily identified, and the books can be searched in much easier manner.

The arrangement from the book data base retrieval system 15 to public communication lines 19A and 19B is the same as above, and detailed description is not given here.

Again in the third embodiment, the automatic preparation program 14 can cope with a plurality of protocols, and it is provided with the function to prepare HTML, RIP and other contents.

As described above, in the third embodiment, there is provided a method, by which books as desired can be searched by two modes by the user who gains access via WWW or personal computer communication, based on the book pages offering detailed information on books. The first is a method, by which major classification and minor classification hierarchy menus are selected one after another, and the desired book is searched by book summary menu (hierarchy menu retrieval method). In the present embodiment, however, an image of a book shelf with books as found in a bookstore is set on the menu page of books belonging to individual minor classification, and the books can be searched much easier.

In the above arrangement, the automatic preparation program 14 prepares book pages and menu pages, and an electronic catalog of books is offered to user's terminal devices on on-line system via Internet 7 or via telephone network.

There are four types of pages in each hierarchy prepared by the automatic preparation program 14 as in the first embodiment. Major classification menu pages are displayed in a first hierarchy, minor classification menu pages are displayed on a second hierarchy, and individual minor classification book menu pages are displayed in a third hierarchy. Fig. 37 shows an example of screen layout of an individual minor classification book menu page of the third hierarchy. On this page, a title is displayed, showing which field the books belongs to. In the lower portion, an image of a book shelf with books as arranged in a bookstore is shown. On this book shelf, books with different widths and different heights are lined up, and on the back covers of books, titles are given in different fonts and colors to attract the attention of the users. Utilizing the data of the size of image (longitudinal and lateral), HTML or RIP file is described in such manner that each of the images is closely arranged from left side, and lower sides of the books are aligned in one straight line. When a back cover of individual book of the third hierarchy is clicked, a book page of a fourth hierarchy is displayed.

In the third embodiment, as in the first embodiment, book pages are prepared by the automatic preparation program 14. Next, the menu page preparation program in the automatic preparation program 14 is run, and menu pages are prepared. The menu page comprises menu pages of books of major classification, minor classification, and individual minor classification.

In a manner similar to the first embodiment, menu pages of books of major classification, minor classification and individual minor classification are prepared according to similar flowcharts.

In the above arrangement, an information processing system for preparing predetermined digital contents is provided with menu page automatic preparation means and commodity page automatic preparation means, using descriptive language of HTML, RIP or other protocol, and it can automatically prepare the menu pages and the commodity pages. Also, the menu pages of individual minor classification books are represented by an image of a book shelf, and the books can be searched much easier. By automatic preparation processing, updating can be achieved within minimal time, and it is possible to promote retroactive effect, to avoid erroneous linking, and to reduce personnel and labor cost. Further, the burden on the server is reduced, and good interchangeability of protocols can be ensured.

### (4) 4th embodiment

In a fourth embodiment of the present invention, description will be given on a case where an electronic catalog is prepared by automatic preparation of book data base as in the third embodiment. In a system according to the present embodiment, the same component as in the system of the third embodiment as described above is referred by the same symbol, and detailed description is not reiterated.

In the fourth embodiment, the system arrangement is the same as in the first embodiment, and description will be given referring to Fig. 1 of the first embodiment. As a result, the arrangement from the system 1 to HTTPD 13 is the same, and detailed description is not given here.

In the automatic preparation program 14, menu pages of major classification and minor classification and book menu pages of individual minor classification are prepared, and menu pages in three hierarchies can be prepared at one time. In the menu page of individual minor classification books in this embodiment, individual book images in the book shelf of the third embodiment are automatically synthesized into one image and used. This contributes to reduction of communication time and decreases the burden on the server. Then, the book page of the fourth hierarchy is prepared.

In the automatic preparation program 14, when book pages of major classification and minor classification are automatically prepared, flowcharts are the same as in the first embodiment, and detailed description is not given here.

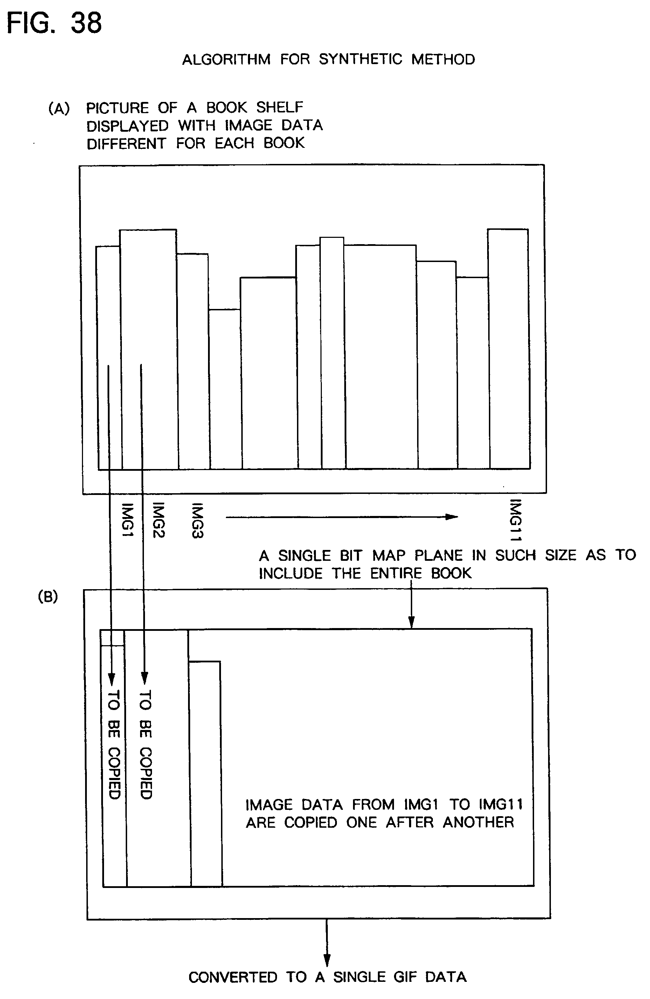

Fig. 38 shows an algorithm to synthesize image data of individual minor classification menu pages of the present embodiment. In (A), 11 GIF files are displayed by determining coordinates on a screen. In (B), the above is synthesized in one bit map plane. First, IMG1 is converted to bit map type, and by determining the coordinates, it is displayed at the furthest left in (B). This procedure is reiterated from IMG2 to IMG11 so that the images are displayed closely fitted to each other without spacing and that the lower ends of the books are aligned in one straight line. Further, a bit map plane is prepared, in which dimensions in four directions (upward, downward, leftward and rightward) are equal to the overall size in (A). This is developed to a single GIF data. By this procedure, one GIF data is synthesized from 11 GIF data.

When an image data is transferred via network, it is necessary to perform the procedures of starting, processing and completion. In case 11 GIF data are transferred, it is necessary to perform three types of procedure one by one. When transfer can be achieved as a single GIF data by the above procedure, processing time can be extensively reduced, and the burden on the server can also be decreased.

In the above arrangement, an information preparation system for preparing predetermined digital contents is provided with menu page automatic preparation means and with commodity page automatic preparation means using descriptive language such as HTML, RIP, or other protocol, and menu pages and commodity pages can be automatically prepared. In the book shelf image, GIF data of menu pages of individual minor classification books are synthesized into a single data, and this makes it possible to reduce processing time for data transfer and to decrease the burden on the server. Also, by the automatic preparation processing, it is possible to achieve updating within minimal time, to promote retroactive effect, to avoid erroneous linking, and to reduce personnel and labor cost. Further, there is an effect that good interchangeability of protocols can be attained.

In the above embodiment, description has been given on an automatic preparation system of digital contents. The digital contents prepared by this system are recorded on CD-ROM, DVD or other recording medium, and it is further recorded in storage device of the computer of each user via communication line. Therefore, by applying the digital contents to a predetermined information presenting system, book information can be provided in case of a bookstore, and clothing information can be provided in case of a clothing store, to consumers via communication line. Therefore, the storage medium produced according to the present invention should also be protected as a part of the invention.

### INDUSTRIAL APPLICABILITY

As described above, in an information processing system for preparing predetermined digital contents, it is possible according to the present invention to automatically prepare by optimizing disposition of display elements having suitability and features in relation to layout, to automatically retrieve and display a large number of commodities and the like, and to prepare a wide variety of commodity pages with high retroactive effect. Also, automatic preparation of the data makes it possible to provide services to many users trough a server with relatively small capacity. Further, the same number of pages can be prepared, and labor and other cost can be reduced compared with the conventional system. Also, digital contents to cope not only with a single protocol but with a plurality of protocols can be prepared.

## Claims

1. An automatic preparation system for preparing digital contents, comprising:
means for using descriptive language of HTML or other protocols for information processing in the preparation of digital contents including characters and images;
means for accepting and storing data showing features of said image portion and/or suitability in relation to layout on screen; and
means for reading the data showing features of said image portion and/or suitability in relation to layout on screen and for optimizing disposition using said data when disposing said image portion on screen.

2. An automatic preparation system for preparing predetermined digital contents, comprising:
means for using descriptive language of HTML or other protocols for information processing;
automatic preparation means for menu pages;
automatic preparation means for commodity pages; and
means for optimizing disposition of display elements having suitability and/or features in relation to layout on screen in association with said menu page automatic preparation means and said commodity page automatic preparation means.

3. An automatic preparation means for preparing digital contents according to claim 2, wherein said optimizing means is designed in such manner that disposition of said display elements is optimized and automatic preparation is performed depending upon presence or absence and/or number of specific display elements.

4. An automatic preparation system for digital contents according to claim 3, wherein said optimizing means is designed in such manner that disposition of said display elements is optimized and the contents are automatically prepared depending upon size of each of the specific display elements.

5. An automatic preparation system for digital contents according to claim 1 or 2, wherein the system comprises means for preparing digital contents to cope with descriptive language of a plurality of protocols including RIP, HTML and VRML.

6. An automatic preparation system for digital contents according to claim 2, wherein, when a retrieval instruction is received from a user under the condition that commodity pages relating to all commodities are prepared in advance using said automatic preparation means for menu pages and said automatic preparation means for commodity pages; and
the system further comprises means for automatically preparing menu pages in response to data base retrieval result according to retrieval instruction of the user.

7. An automatic preparation system for preparing digital contents according to claim 2, wherein hierarchical menu pages are prepared in accordance with one or more classification items of the data base.

8. An automatic preparation system for digital contents according to claim 2, wherein said menu page automatic preparation means and said commodity page automatic preparation means comprise:
means for manually changing and correcting layout of specified pages; and
means for storing the corrected content when said specified layout has been updated.

9. An automatic preparation system for digital contents according to claim 2, wherein, when the data base used in said automatic preparation of digital contents has been updated, the system comprises means for performing differential updating for updating said commodity page only to the updated content.

10. An automatic preparation system for digital contents according to claim 2, wherein said menu page automatic preparation means comprises means for automatically preparing contents where two or more images of back covers of books and/or back covers of CD are arranged in parallel.

11. An automatic preparation system for digital contents according to claim 10, wherein the system comprises means for synthesizing a single image data from a plurality of image data when contents displaying a plurality of images in parallel are prepared in said menu page.

12. A recording medium, comprising digital contents automatically prepared by optimizing disposition of image portion on screen when digital contents including character and image portions are prepared, whereby descriptive language of HTML or other protocols is used for information processing, and data showing feature of said image portion and/or suitability in relation to layout on screen is used.
